(19) Europäisches Patentamt
European Patent Office
Office européen des brevets

(11) **EP 1 415 712 B1**

## (12) FASCICULE DE BREVET EUROPEEN

(45) Date de publication et mention de la délivrance du brevet:
**31.12.2008 Bulletin 2009/01**

(51) Int Cl.:
***B01J 21/12*** *(2006.01)*    ***B01J 35/10*** *(2006.01)*
***B01J 23/888*** *(2006.01)*

(21) Numéro de dépôt: **03292473.0**

(22) Date de dépôt: **07.10.2003**

(54) **Catalyseur et procédé d'hydrocraquage de charges hydrocarbonées**

Katalysator und Verfahren zum Hydrokracken von Kohlenwasserstoffeinsätzen

Catalyst and process for the hydrocracking of hydrocarbon feedstocks

(84) Etats contractants désignés:
**BE DE DK IT NL**

(30) Priorité: **30.10.2002 FR 0213640**

(43) Date de publication de la demande:
**06.05.2004 Bulletin 2004/19**

(73) Titulaire: **Institut Français du Pétrole**
**92852 Rueil-Malmaison Cedex (FR)**

(72) Inventeurs:
  • **Euzen, Patrick**
    **75015 Paris (FR)**
  • **Bobin, Carole**
    **78160 Marley le Roi (FR)**
  • **Roy Auberger, Magalie**
    **38300 Bourgoin Jallieu (FR)**
  • **Benazzi, Eric**
    **78400 Chatou (FR)**
  • **Bourges, Patrick**
    **92000 Nanterre (FR)**
  • **Gueret, Christophe**
    **69560 St. Romain en Gal (FR)**

(56) Documents cités:
WO-A-98/19791          FR-A- 2 780 309
US-A- 3 471 399        US-A- 3 925 197
US-A- 4 051 021        US-A- 4 134 856
US-A- 4 837 193        US-A- 5 968 344

Remarques:
Le dossier contient des informations techniques présentées postérieurement au dépôt de la demande et ne figurant pas dans le présent fascicule.

## Description

La présente invention concerne des supports silico-aluminiques, des catalyseurs et les procédés d'hydrocraquage les mettant en oeuvre.

L'objectif du procédé est essentiellement la production de distillats moyens, c'est-à-dire de coupes à point d'ébullition initial d'au moins 150°C et final allant jusqu'à avant le point d'ébullition initial du résidu, par exemple inférieur à 340°C, ou encore à 370°C.

## Art Antérieur

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports dont les surfaces varient généralement de 150 à 800 $m^2.g^{-1}$ et présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, soit par une association d'au moins un métal du groupe VIB de la classification périodique et au moins un métal du groupe VIII.

L'équilibre entre les deux fonctions acide et hydrogénante est un des paramètres qui régissent l'activité et la sélectivité du catalyseur. Une fonction acide faible et une fonction hydrogénante forte donnent des catalyseurs peu actifs, travaillant à température en général élevée (supérieure ou égale à 390-400 °C), et à vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens. Inversement, une fonction acide forte et une fonction hydrogénante faible donnent des catalyseurs actifs, mais présentant de moins bonnes sélectivités en distillats moyens (carburéacteurs et gazoles). Un type de catalyseurs conventionnels d'hydrocraquage est à base de supports amorphes modérément acides, tels les silice-alumines par exemple. Ces systèmes sont utilisés pour produire des distillats moyens de bonne qualité, et éventuellement, des bases huiles. Ces catalyseurs sont par exemple utilisés dans les procédés en deux étapes.

Les performances de ces catalyseurs sont étroitement liées à leurs caractéristiques physico-chimiques, et plus particulièrement à leurs caractéristiques texturales. Ainsi et d'une façon générale, la présence de macropores dans les catalyseurs comportant une silice-alumine (tels que ceux décrits par exemple dans le brevet US 5 370 788) est un inconvénient. On entend par macropores, des pores dont le diamètre est supérieur à 500 Å.

En voulant résoudre ce problème la demanderesse a été conduite à préparer des catalyseurs d'hydrocraquage à teneurs réduites en macropores et présentant des performances catalytiques améliorées dans les procédés d'hydrocraquage.

Plus précisément, l'invention concerne un catalyseur d'hydrocraquage, le support utilisé pour préparer ledit catalyseur et le procédé d'hydrocraquage le mettant en oeuvre.

## Description détaillée de l'invention

Techniques de caractérisation

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans l'exposé qui suit de l'invention, on entend par volume mercure des supports et des catalyseurs, le volume mesuré par intrusion au porosimètre à mercure selon la norme ASTM D4284-83 à une pression maximale de 4000 bar, utilisant une tension de surface de 484 dyne/cm et un angle de contact pour les supports silice-alumine amorphe de 140°. On définit le diamètre moyen mercure comme étant un diamètre tel que tous les pores de taille inférieure à ce diamètre constituent 50% du volume poreux ($V_{Hg}$), dans un intervalle compris entre 36 Å et 1000 Å. Une des raisons pour lesquelles il est préférable d'utiliser le support comme base pour définir la distribution poreuse tient dans le fait que l'angle de contact du mercure varie après imprégnation des métaux et ceci en fonction de la nature et de type de métaux. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur".

Afin d'obtenir une meilleure précision, la valeur du volume mercure en ml/g donnée dans le texte qui suit correspond à la valeur du volume mercure total en ml/g mesurée sur l'échantillon moins la valeur du volume mercure en ml/g mesurée sur le même échantillon pour une pression correspondant à 30 psi (environ 2 bars). On définit également le diamètre moyen mercure comme étant un diamètre tel que tous les pores de taille inférieure à ce diamètre constituent 50% du volume poreux total mercure.

Afin de mieux caractériser la distribution poreuse, on définit enfin les critères de distribution poreuse suivants en mercure: le volume V1 correspond au volume contenu dans les pores dont le diamètre est inférieur au diamètre moyen moins 30 Å. Le volume V2 correspond au volume contenu dans les pores de diamètre supérieur ou égal au diamètre moyen moins 30 Å et inférieur au diamètre moyen plus 30 Å. Le volume V3 correspond au volume contenu dans les pores de diamètre supérieur ou égal au diamètre moyen plus 30 Å. Le volume V4 correspond au volume contenu dans les pores dont le diamètre est inférieur au diamètre moyen moins 15 Å. Le volume V5 correspond au volume contenu dans les pores de diamètre supérieur ou égal au diamètre moyen moins 15 Å et inférieur au diamètre moyen plus 15 Å. Le volume V6 correspond au volume contenu dans les pores de diamètre supérieur ou égal au diamètre moyen plus 15 Å.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society", 73, 373, (1951) écrit par E.P. Barrett, L.G.Joyner et P.P.Halenda. Dans l'exposé qui suit de l'invention, on entend par volume adsorption azote, le volume mesuré pour $P/P_0$= 0,99, pression pour laquelle il est admis que l'azote a rempli tous les pores. On définit le diamètre moyen désorption azote comme étant un diamètre tel que tous les pores inférieurs à ce diamètre constituent 50% du volume poreux ($V_p$) mesuré sur la branche de désorption de l'isotherme azote.

Par surface adsorption, on entend la surface mesurée sur la branche de l'isotherme d'adsorption. On se reportera par exemple à l'article de A. Lecloux "Mémoires Société Royale des Sciences de Liège, 6$^{ème}$ série, Tome I, fasc.4, pp.169-209 (1971)".

La teneur en sodium a été mesurée par spectrométrie d'absorption atomique. La diffraction X est une technique pouvant être utilisée pour caractériser les supports et catalyseurs selon l'invention. Dans l'exposé qui suit, l'analyse des rayons X est réalisée sur poudre avec un diffractomètre Philips PW 1830 opérant en réflexion et équipé d'un monochromateur arrière en utilisant la radiation CoKalpha, ($\lambda K_{\alpha 1}$, = 1.7890 Å, $\lambda l K_{\alpha 2}$ = 1.793 Å, rapport d'intensité $K_{\alpha 1}/ K_{\alpha 2}$ = 0,5). Pour le diagramme de diffraction X de l'alumine gamma, on se reportera à la base de données ICDD, fiche 10-0425. En particulier, les 2 pics les plus intenses sont situés à une position correspondant à un d compris entre 1,39 et 1,40 Å et un d compris entre 1,97 à 2,00 Å. On appelle d la distance inter-réticulaire qui est déduite de la position angulaire en utilisant la relation de Bragg (2 d $_{(hkl)}$ * sin ($\theta$) = n * $\lambda$). Par alumine gamma, on entend dans la suite du texte entre autres par exemple une alumine comprise dans le groupe composé des alumines gamma cubique, gamma pseudo-cubique, gamma tétragonale, gamma mal ou peu cristallisée, gamma grande surface, gamma basse surface, gamma issue de grosse boehmite, gamma issue de boehmite cristallisée, gamma issue de boehmite peu ou mal cristallisée, gamma issue d'un mélange de boehmite cristallisée et d'un gel amorphe, gamma issue d'un gel amorphe, gamma en évolution vers delta. Pour les positions des pics de diffraction des alumines éta, delta et thêta, on peut se référer à l'article de B.C. Lippens, J.J. Steggerda, dans Physical and Chemical aspects of adsorbents and catalysts, E.G. Linsen (Ed.), Academic Press, London. 1970, p.171-211.

Pour les supports et catalyseurs selon l'invention, le diagramme de diffraction X met en évidence un pic large caractéristique de la présence de silice amorphe.

Par ailleurs, dans l'ensemble du texte qui suit, le composé d'alumine peut contenir une fraction amorphe difficilement détectable par les techniques de DRX. On sous-entendra donc par la suite que les composés d'alumine utilisés ou décrits dans le texte peuvent contenir une fraction amorphe ou mal cristallisée.

Les supports et catalyseurs selon l'invention ont été analysés par RMN MAS du solide de $^{27}$Al sur un spectromètre de la firme Brüker de type MSL 400, en sonde 4 mm. La vitesse de rotation des échantillons est de l'ordre de 11 kHz. Potentiellement, la RMN de l'aluminium permet de distinguer trois types d'aluminium dont les déplacements chimiques sont reportés ci-après :

Entre 100 et 40 ppm, aluminiums de type tétra-coordinés, notés $Al_{IV}$,
Entre 40 et 20 ppm, aluminiums de type penta-coordinés, notés $Al_{V}$,
Entre 20 et - 100 ppm, aluminiums de type hexa-coordinés, notés $Al_{VI}$.

L'atome d'aluminium est un noyau quadripolaire. Dans certaines conditions d'analyse (champs de radiofréquence faible : 30 kHz, angle d'impulsion faible : $\pi/2$ et échantillon saturé en eau), la technique de RMN de rotation à l'angle magique (MAS) est une technique quantitative. La décomposition des spectres RMN MAS permet d'accéder directement à la quantité des différentes espèces. Le spectre est calé en déplacement chimique par rapport à une solution 1 M de nitrate d'aluminium. Le signal d'aluminium est à zéro ppm. Nous avons choisi d'intégrer les signaux entre 100 et 20 ppm pour les $Al_{IV}$ et $Al_V$, ce qui correspond à l'aire 1, et entre 20 et -100 ppm pour $Al_{VI}$, ce qui correspond à l'aire 2. Dans l'exposé qui suit de l'invention, on entend par proportion des $Al_{VI}$ octaédriques le rapport suivant: aire 2/ (aire 1 + aire 2).

Une méthode de caractérisation des supports et catalyseurs selon l'invention pouvant être utilisée est la microscopie électronique par transmission (MET). Pour cela on utilise un microscope électronique (du type Jeol 2010 ou Philips Tecnai20F éventuellement avec balayage) équipé d'un spectromètre à dispersion d'énergie (EDS) pour l'analyse des rayons X (par exemple un Tracor ou un Edax). Le détecteur EDS doit permettre la détection des éléments légers. L'association de ces deux outils, MET et EDS, permet de combiner l'imagerie et l'analyse chimique locale avec une bonne résolution spatiale.

Pour ce type d'analyse, les échantillons sont finement broyés à sec dans un mortier ; la poudre est ensuite incluse dans de la résine pour réaliser des coupes ultrafines d'épaisseur 70 nm environ. Ces coupes sont recueillies sur des grilles de Cu recouvertes d'un film de carbone amorphe à trous servant de support. Elles sont ensuite introduites dans le microscope pour observation et analyse sous vide secondaire. En imagerie, on distingue alors aisément les zones d'échantillon des zones de résine. On procède ensuite à un certain nombre d'analyses, 10 au minimum, de préférence comprises entre 15 et 30, sur différentes zones de l'échantillon industriel. La taille du faisceau électronique pour l'analyse des zones (déterminant approximativement la taille des zones analysées) est de 50 nm de diamètre au maximum, de préférence de 20 nm, de manière encore plus préférée 10, 5, 2 ou 1 nm de diamètre. En mode balayé, la zone analysée sera fonction de la taille de la zone balayée et non plus de la taille du faisceau généralement réduit:

Le traitement semi quantitatif des spectres X recueillis à l'aide du spectromètre EDS permet d'obtenir la concentration relative de Al et de Si (en % atomique) et le rapport Si/Al pour chacune des zones analysées. On peut alors calculer la moyenne $Si/Al_m$ et l'écart type $\sigma$ de cet ensemble de mesures. Dans les exemples non limitatifs de l'exposé qui suit de l'invention, la sonde de 50 nm est la sonde utilisée pour caractériser les supports et catalyseurs selon l'invention sauf mention contraire.

La densité de remplissage tassée (DRT) est mesurée de la manière décrite dans l'ouvrage " Applied Heterogenous Catalysis " de J.F. Le Page, J. Cosyns, P. Courty, E. Freund, J-P. Franck, Y. Jacquin, B. Juguin, C. Marcilly, G. Martino, J. Miquel, R. Montarnal, A. Sugier, H. Van Landeghem, Technip, Paris, 1987. Un cylindre gradué de dimensions acceptables est rempli de catalyseur par additions successives; et entre chaque addition, le catalyseur est tassé en secouant le cylindre jusqu'à atteindre un volume constant. Cette mesure est généralement réalisée sur 1000 cm³ de catalyseur tassé dans un cylindre dont le ratio hauteur sur diamètre est proche de 5:1. Cette mesure peut être, de manière préférée, réalisée sur des appareils automatisés tels que Autotap® commercialisé par Quantachrome®.

L'acidité de la matrice est mesurée par spectrométrie Infra-Rouge (IR). Les spectres IR sont enregistrés sur un interféromètre Nicolet de type Nexus-670 sous une résolution de 4 cm⁻¹. avec une apodisation de type Happ-Gensel. L'échantillon (20 mg) est pressé sous la forme d'une pastille auto-supportée, puis est placé dans une cellule d'analyse in-situ (25°C à 550°C, four déporté du faisceau IR, vide secondaire de $10^{-6}$ mbar). Le diamètre de la pastille est de 16 mm. L'échantillon est prétraité de la façon suivante afin d'éliminer l'eau physisorbée et de déshydroxyler partiellement la surface du catalyseur afin d'obtenir une image représentative de l'acidité du catalyseur en fonctionnement :

- montée en température de 25°C à 300°C en 3 heures
- palier de 10 heures à 300 °C
- descente de température de 300°C à 25°C en 3 heures

La sonde basique (pyridine) est ensuite adsorbée à pression saturante à 25°C puis thermo-désorbée selon les paliers suivants :

- 25°C pendant 2 heures sous vide secondaire
- 100°C 1 heure sous vide secondaire
- 200°C 1 heure sous vide secondaire
- 300°C 1 heure sous vide secondaire

Un spectre est enregistré à 25°C à la fin du prétraitement et à chaque palier de désorption en mode transmission avec un temps d'accumulation de 100 s. Les spectres sont ramenés à iso-masse (donc supposés à iso-épaisseur) (20 mg exactement). Le nombre de sites de Lewis est proportionnel à la surface du pic dont le maximum se situe vers 1450 cm⁻¹, tout épaulement étant inclus. Le nombre de sites de Bronsted est proportionnel à la surface du pic dont le maximum se situe vers 1545 cm⁻¹. Le rapport du nombre de sites de Bronsted /nombre de sites de Lewis (B/L) est estimé égal au rapport des surfaces de deux pics décrits ci-dessus. On utilise généralement la surface des pics à 25°C. Ce rapport B/L est de manière générale calculé à partir du spectre enregistré à 25°C à la fin du prétraitement.

Plus précisément, l'invention concerne un catalyseur comprenant au moins un élément hydro-déshydrogénant choisi dans le groupe formé par les éléments du groupe VIB et du groupe VIII de la classification périodique et un support non zéolitique à base de silice - alumine contenant une quantité supérieure à 5% poids et inférieure ou égale à 95% poids de silice (SiO$_2$), ledit catalyseur présentant les caractéristiques suivantes :

- un diamètre moyen poreux, mesuré par porosimétrie au mercure, compris entre 20 et 140 Å,
- un volume poreux total, mesuré par porosimétrie au mercure, compris entre 0,1 ml/g et 0,6 ml/g,
- un volume poreux total, mesuré par porosimétrie azote, compris entre 0,1 ml/g et 0,6 ml/g,
- une surface spécifique BET comprise entre 100 et 550 m$^2$/g ,
- un volume poreux, mesuré par porosimétrie au mercure, compris dans les pores de diamètre supérieur à 140 Å inférieur à 0,1 ml/g ,
- un volume poreux, mesuré par porosimétrie au mercure, compris dans les pores de diamètre supérieur à 160 Å inférieur à 0,1 ml/g,
- un volume poreux, mesuré par porosimétrie au mercure, compris dans les pores de diamètre supérieur à 200 Å inférieur à 0,1 ml/g,
- un volume poreux, mesuré par porosimétrie au mercure, compris dans les pores de diamètre supérieur à 500 Å inférieur à 0,01 ml/g.
- un diagramme de diffraction X qui contient au moins les raies principales caractéristiques d'au moins une des alumines de transition comprise dans le groupe composé par les alumines alpha, rhô, chi, eta, gamma, kappa, thêta et delta.

La densité de remplissage tassée des catalyseurs est généralement supérieure à 0,85 g/cm$^3$, de manière préférée supérieure à 0,95 g/cm$^3$, de manière très préférée supérieure à 1,025 cm$^3$/g et de manière encore plus préférée supérieure à 1,1 g/cm$^3$.

Plus précisément, l'invention concerne un support non zéolitique à base de silice - alumine contenant une quantité supérieure à 5% poids et inférieure ou égale à 95% poids de silice (SiO$_2$) caractérisé par:

- un diamètre moyen poreux, mesuré par porosimétrie au mercure, compris entre 20 et 140 Å,
- un volume poreux total, mesuré par porosimétrie au mercure, compris entre 0,1 ml/g et 0,6 ml/g,
- un volume poreux total, mesuré par porosimétrie azote, compris entre 0,1 ml/g et 0,6 ml/g,
- une surface spécifique BET comprise entre 100 et 550 m$^2$/g ,
- un volume poreux, mesuré par porosimétrie au mercure, compris dans les pores de diamètre supérieur à 140 Å inférieur à 0,1 ml/g,
- un volume poreux, mesuré par porosimétrie au mercure, compris dans les pores de diamètre supérieur à 160 Å inférieur à 0,1 ml/g,
- un volume poreux, mesuré par porosimétrie au mercure, compris dans les pores de diamètre supérieur à 200 Å inférieur à 0,1 ml/g,
- un volume poreux, mesuré par porosimétrie au mercure, compris dans les pores de diamètre supérieur à 500 Å inférieur à 0,01 ml/g.
- un diagramme de diffraction X qui contient au moins les raies principales caractéristiques d'au moins une des alumines de transition comprise dans le groupe composé par les alumines rho, chi, eta, gamma, kappa, thêta et delta.

La densité de remplissage tassée des supports, après calcination, est généralement supérieure à 0,65 g/cm$^3$, de manière préférée supérieure à 0,72 g/cm$^3$, de manière très préférée supérieure à 0,75 g/cm$^3$ et de manière encore plus préférée supérieure à 0,78 g/cm$^3$.

Un catalyseur contenant le support précédent est également compris dans l'invention.
L'invention concerne également un procédé d'hydrocraquage et/ou d'hydroconversion, et un procédé d'hydrotraitement de charges hydrocarbonées avec lesdits catalyseurs.

La présente invention concerne un catalyseur d'hydrocraquage qui comporte :

- un support non zéolitique à base de silice - alumine (c'est-à-dire comprenant silice et alumine) de teneur massique en silice (SiO$_2$) supérieure à 5% poids et inférieure ou égale à 95% poids, de préférence comprise entre 10 et 80% poids, de manière préférée une teneur en silice supérieure à 20% poids et inférieure à 80% poids et de manière encore plus préférée supérieure à 25% poids et inférieure à 75% poids, la teneur en silice est avantageusement comprise entre 10 et 50 % poids,

- de préférence une teneur en impuretés cationiques inférieure à 0,1%poids, de manière préférée inférieure à 0,05% poids et de manière encore plus préférée inférieure à 0,025% poids. On entend par teneur en impuretés cationiques la teneur totale en alcalins.

- de préférence une teneur en impuretés anioniques inférieure à 1% poids, de manière préférée inférieure à 0,5% poids et de manière encore plus préférée inférieure à 0,1% poids.

La silice-alumine utilisée dans le procédé selon l'invention est de préférence une silice-alumine homogène à l'échelle du micromètre et dans laquelle la teneur en impuretés cationiques (par exemple $Na^+$) est inférieure à 0,1%poids, de manière préférée inférieure à 0,05% poids et de manière encore plus préférée inférieure à 0,025% poids et la teneur en impuretés anioniques (par exemple $SO_4^{2-}$, $Cl^-$) est inférieure à 1% poids, de manière préférée inférieure à 0,5% poids et de manière encore plus préférée inférieure à 0,1% poids.

Ainsi tout procédé de synthèse de silice-alumine connu de l'homme du métier conduisant à une silice-alumine homogène à l'échelle du micromètre et dans lequel les impuretés cationiques (par exemple $Na^+$) peuvent être ramenées à moins de 0,1%, de manière préférée à une teneur inférieure à 0,05% poids et de manière encore plus préférée inférieure à 0,025% poids et dans lequel les impuretés anioniques (par exemple $SO_4^{2-}$, $Cl^-$) peuvent être ramenées à moins de 1% et de manière plus préférée à une teneur inférieure à 0,05% poids convient pour préparer les supports objet de l'invention.

- au moins un élément hydro-déshydrogénant choisi dans le groupe formé par les éléments du groupe VIB et du groupe VIII de la classification périodique,
- de préférence une teneur massique en métal(aux) du groupe VIB, sous forme métallique ou sous forme oxyde comprise entre 1 et 50 % en poids, de manière préférée entre 1,5 et 35 %, et de manière encore plus préférée entre 1,5 et 30%,
- de préférence une teneur massique en métaux du groupe VIII, sous forme métallique ou sous forme oxyde comprise entre 0,1 et 30 % en poids, de manière préférée entre 0,2 et 25 % et de manière encore,plus préférée entre 0,2 et 20%,
- éventuellement au moins un élément dopant déposé sur le catalyseur et choisi dans le groupe formé par le phosphore, le bore et le silicium. Les teneurs massiques en bore, silicium, phosphore sous forme d'oxydes, sont comprises entre 0,1 et 15%, de préférence entre 0,1 et 10%, et encore plus avantageusement entre 0,1 et 5% poids. On entend par élément dopant un élément introduit après la préparation du support silico-aluminique décrit précédemment,
- éventuellement au moins un élément du groupe VIIB (manganèse par exemple et de préférence), et une teneur pondérale comprise entre 0 et 20%, de préférence entre 0 et 10 % du composé sous forme oxyde ou métal.
- éventuellement au moins un élément du groupe VB (niobium par exemple et de préférence), et une teneur pondérale comprise entre 0 et 40%, de préférence entre 0 et 20% du composé sous forme oxyde ou métal,
- un diamètre moyen poreux, mesuré par porosimétrie au mercure, compris entre 20 et 140 Å, de préférence entre 40 et 120 Å et de manière encore plus préférée entre 50 et 100 Å,
- de préférence un rapport entre le volume V2, mesuré par porosimétrie au mercure, compris entre le $D_{moyen}$ - 30 Å et le $D_{moyen}$ + 30 Å, sur le volume poreux total également mesuré par porosimétrie au mercure supérieur à 0,6, de préférence supérieur à 0,7 et de manière encore plus préférée supérieur à 0,8.
- de préférence un volume V3 compris dans les pores de diamètres supérieurs à $D_{moyen}$ + 30 Å, mesuré par porosimétrie au mercure, inférieur à 0,1 ml/g, de manière préférée inférieur à 0,06 ml/g et de manière encore plus préférée inférieur à 0,04 ml/g.
- de préférence un rapport entre le volume V5 compris entre le $D_{moyen}$ - 15 Å et le $D_{moyen}$ + 15 Å mesuré par porosimétrie au mercure, et le volume V2 compris entre le $D_{moyen}$ - 30 Å et le $D_{moyen}$ + 30 Å, mesuré par porosimétrie au mercure, supérieur à 0,6, de manière préférée supérieur à 0,7 et de manière encore plus préférée supérieur à 0,8.
- de préférence un volume V6 compris dans les pores de diamètres supérieurs à $D_{moyen}$ + 15 Å, mesuré par porosimétrie au mercure, inférieur à 0,2 ml/g, de manière préférée inférieur à 0,1 ml/g et de manière encore plus préférée inférieur à 0,05 ml/g.
- un volume poreux total, mesuré par porosimétrie au mercure, compris entre 0,1 ml/g et 0,6 ml/g, de manière préférée compris entre 0,20 et 0,50 ml/g et de manière encore plus préférée supérieur à 0,20 ml/g,
- un volume poreux total, mesuré par porosimétrie azote, compris entre 0,1 ml/g et 0,6 ml/g, de préférence compris entre 0,20 et 0,50 ml/g,
- une surface spécifique BET comprise entre 100 et 550 $m^2$/g , de préférence comprise entre 150 et 500 $m^2$/g,
- de préférence une surface adsorption telle que le rapport entre la surface adsorption et la surface BET soit supérieur à 0,5, de manière préférée supérieur à 0,65 et de manière plus préférée supérieur à 0,8.
- un volume poreux, mesuré par porosimétrie au mercure, compris dans les pores de diamètre supérieur à 140 Å, inférieur à 0,1 ml/g , de préférence inférieur à 0,05 ml/g et de manière encore plus préférée inférieur à 0,03 ml/g.
- un volume poreux, mesuré par porosimétrie au mercure, compris dans les pores de diamètre supérieur à 160 Å,

inférieur à 0,1 ml/g de préférence inférieur à 0,05 ml/g et de manière encore plus préférée inférieur à 0,025 ml/g.

- un volume poreux, mesuré par porosimétrie au mercure, compris dans les pores de diamètre supérieur à 200 Å, inférieur à 0,1 ml/g, de préférence inférieur à 0,05 ml/g et de manière encore plus préférée inférieur à 0,025 ml/g.
- un volume poreux, mesuré par porosimétrie au mercure, compris dans les pores de diamètre supérieur à 500 Å, inférieur à 0,01 ml/g.
- un diagramme de diffraction X qui contient au moins les raies principales caractéristiques d'au moins une des alumines de transition comprises dans le groupe composé par les alumines rho, chi, kappa, eta, gamma, thêta et delta et de manière préférée caractérisé en ce qu'il contient au moins les raies principales caractéristiques d'au moins une des alumines de transition compris dans le groupe composé par l'alumine gamma, éta, thêta et delta, et de manière plus préférée caractérisé en ce qu'il contient au moins les raies principales caractéristiques de l'alumine gamma et éta, et de manière encore plus préférée caractérisé en ce qu'il contient les pics à un d compris entre 1,39 à 1,40 Å et à un d compris entre 1,97 Å à 2,00 Å .

Les spectres RMN MAS du solide de $^{27}$Al des supports et catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 110 ppm. Ce massif peut être décomposé en au moins deux espèces. L'espèce prédominante de ce massif correspondrait aux atomes d'$Al_{IV}$ (tétraédrique). Pour les supports et catalyseurs de la présente invention, avantageusement, la proportion des $Al_{VI}$ octaédriques est supérieure à 50%, de manière préférée supérieure à 60%, et de manière encore plus préférée supérieure à 70%.

Dans un mode de réalisation de l'invention, le catalyseur contient un support comprenant au moins deux zones silico-aluminiques, les dites zones ayant des rapports Si/Al inférieurs ou supérieurs au rapport Si/Al global déterminé par fluorescence X. Ainsi un support ayant un rapport Si/Al égal à 0,5 comprend par exemple deux zones silico-aluminiques, l'une des zones a un rapport Si/Al déterminé par MET inférieur à 0,5 et l'autre zone a un rapport Si/Al déterminé par MET compris entre 0,5 et 2,5.

Dans un autre mode de réalisation de l'invention, le catalyseur contient un support comprenant une seule zone silico-aluminique, ladite zone ayant un rapport Si/Al égal au rapport Si/Al global déterminé par fluorescence X et inférieur à 2,3.

L'acidité du support selon l'invention peut être de manière avantageuse, sans que cela ne restreigne la portée de l'invention, mesurée par suivi IR de la thermo-désorption de la pyridine. Généralement, le rapport B/L, tel que décrit ci-dessus, du support selon l'invention est compris entre 0,05 et 1, de manière préférée entre 0,05 et 0,7, de manière très préférée entre 0,06 et 0,3 et de manière encore plus préférée entre 0,075 et 0,15.

Procédés de préparation

Les catalyseurs selon l'invention peuvent être préparés selon toutes les méthodes bien connues de l'homme du métier.

Un procédé préféré de préparation du catalyseur selon la présente invention comprend les étapes suivantes :

Selon un mode de préparation préféré, le précurseur est obtenu par mise en forme directe de la silice-alumine seule ou par mise en forme de la silice-alumine avec au moins un liant, puis séchage et calcination. Les éléments des groupes VIB et/ou VIII, et éventuellement ceux choisis parmi le phosphore, le bore, le silicium et éventuellement les éléments des groupes VB, et VIIB, sont alors éventuellement introduits par toute méthode connue de l'homme du métier, avant ou après la mise en forme et avant ou après la calcination du précurseur ou du catalyseur.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à mettre en forme la silice-alumine sans liant après un malaxage de cette dernière, puis passage de la pâte ainsi obtenue au travers d'une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité, au moment du malaxage. Elle peut également être introduite par une ou plusieurs opérations d'échange ionique sur le support calciné constitué d'au moins une silice-alumine, éventuellement mise en forme avec un liant, à l'aide de solutions contenant les sels précurseurs des métaux choisis lorsque ceux-ci appartiennent au groupe VIII. Elle peut aussi être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite, de façon très préférée par une ou plusieurs opérations d'imprégnation du support calciné constitué d'au moins une silice-alumine selon l'invention et éventuellement d'au moins un liant, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur de la présente invention peut donc renfermer au moins un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel, le platine, le palladium et le ruthénium. Le catalyseur selon l'invention peut également renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, platine-palladium, les associations préférées sont : nickel-molybdène, cobalt-molybdène, cobalt-tungstène et encore plus avantageusement platine-palladium et nickel-tungstène. Il est également possible d'utiliser des associations de trois métaux par exemple nickel-cobalt-molybdène, nickel-cobalt-tungstène. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférées étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

Les éléments suivants : bore et/ou silicium et/ou phosphore et éventuellement l'(les) élément(s) choisi(s) dans le(s) groupe(s) VIIB et VB, peuvent être introduits dans le catalyseur à tout niveau de la préparation et selon toute technique connue de l'homme du métier.

Une méthode préférée selon l'invention consiste à déposer le ou les éléments dopants choisis, par exemple le couple bore-silicium, sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant par exemple le bore. Dans le cas où l'on dépose par exemple également du silicium, on utilisera par exemple une solution d'un composé du silicium de type silicone ou émulsion d'huile silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-tungstène supporté sur silice-alumine, il est possible d'imprégner ce précurseur par de la solution aqueuse de biborate d'ammonium et de silicone Rhodorsil E1 P de la société Rhodia de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures.

L'élément dopant choisi dans le groupe formé par le silicium, le bore et le phosphore ainsi que les éléments des groupes VIIB, VB, peuvent être introduits par une ou plusieurs opérations d'imprégnation avec excès de solution sur le précurseur calciné.

Lorsque éventuellement au moins un élément dopant, B et/ou P et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de la silice-alumine selon l'invention.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle $Si(OEt)_4$, les siloxanes, les polysiloxanes, les silicones, les émulsions de silicones, les silicates d'halogénures comme le fluorosilicate

d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les métaux du groupe VIB et du groupe VIII du catalyseur de la présente invention peuvent être présents en totalité ou partiellement sous forme métallique et/ou oxyde et/ou sulfure.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels.

Les sources d'éléments du groupe VIII qui peuvent être utilisées sont bien connues de l'homme du métier. Par exemple, pour les métaux non nobles on utilisera les nitrates, les sulfates, les hydroxydes, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

De préférence, on n'ajoute pas d'halogènes autres que celui introduit à l'imprégnation, cet halogène étant de préférence le chlore.

Caractéristiques du support

Le catalyseur ainsi obtenu est préparé, par toute technique connue de l'homme du métier, à partir d'un support dont les caractéristiques sont les suivantes :

- la teneur massique en silice $(SiO_2)$ est supérieure à 5% poids et inférieure ou égale à 95% poids de silice $(SiO_2)$, de préférence comprise entre 10 et 80% poids, de manière préférée une teneur en silice supérieure à 20% poids et inférieure à 80% poids et de manière encore plus préférée supérieure à 25% poids et inférieure à 75% poids, la teneur en silice est avantageusement comprise entre 10 et 50 % poids,
- de préférence la teneur en impuretés cationiques est inférieure à 0,1%poids, de manière préférée inférieure à 0,05% poids et de manière encore plus préférée inférieure à 0,025% poids. On entend par teneur en impuretés cationiques la teneur totale en alcalins.
- de préférence la teneur en impuretés anioniques est inférieure à 1% poids, de manière préférée inférieure à 0,5% poids et de manière encore plus préférée inférieure à 0,1% poids.
- le diamètre moyen poreux, mesuré par porosimétrie au mercure, est compris entre 20 et 140 Å, de préférence entre 40 et 120 Å et de manière encore plus préférée entre 50 et 100 Å,
- de préférence le rapport entre le volume V2, mesuré par porosimétrie au mercure, compris entre le $D_{moyen}$ - 30 Å et le $D_{moyen}$ + 30 Å sur le volume poreux total également mesuré par porosimétrie au mercure, est supérieur à 0,6, de manière plus préférée supérieur à 0,7 et de manière encore plus préférée supérieur à 0,8.
- de préférence le volume V3 compris dans les pores de diamètres supérieurs à $D_{moyen}$ + 30 Å, mesuré par porosimétrie au mercure, est inférieur à 0,1 ml/g, de manière préférée inférieur à 0,06 ml/g et de manière encore plus préférée inférieur à 0,04 ml/g.
- de préférence le rapport entre le volume V5, mesuré par porosimétrie au mercure, compris entre le $D_{moyen}$ - 15 Å et le $D_{moyen}$ + 15 Å sur le volume V2, mesuré par porosimétrie au mercure, compris entre le $D_{moyen}$ - 30 Å et le $D_{moyen}$ + 30 Å est supérieur à 0,6, de manière plus préférée supérieur à 0,7 et de manière encore plus préférée supérieur à 0,8.
- de préférence le volume V6, compris dans les pores de diamètres supérieurs à $D_{moyen}$ + 15 Å et mesuré par porosimétrie au mercure est inférieur à 0,2 ml/g, de manière préférée inférieur à 0,1 ml/g et de manière encore plus préférée inférieur à 0,05 ml/g.
- le volume poreux total, mesuré par porosimétrie au mercure, est compris entre 0,1 ml/g et 0,6 ml/g, de manière préférée compris entre 0,20 et 0,50 ml/g et de manière encore plus préférée supérieur à 0,20 ml/g,
- le volume poreux total, mesuré par adsorption d'azote, est compris entre 0,1 ml/g et 0,6 ml/g, de préférence compris entre 0,20 et 0,50 ml/g,
- la surface spécifique BET est comprise entre 100 et 550 $m^2/g$ , de préférence comprise entre 150 et 500 $m^2/g$,
- de préférence la surface adsorption est telle que le rapport entre la surface adsorption et la surface BET soit supérieur à 0,5, de manière plus préférée supérieur à 0,65 et de manière encore plus préférée supérieur à 0,8.
- le volume poreux, mesuré par porosimétrie au mercure, compris dans les pores de diamètre supérieur à 140 Å est inférieur à 0,1 ml/g , de préférence inférieur à 0,05 ml/g et de manière encore plus préférée inférieur à 0,03 ml/g.
- le volume poreux, mesuré par porosimétrie au mercure, compris dans les pores de diamètre supérieur à 160 Å est inférieur à 0,1 ml/g de préférence inférieur à 0,05 ml/g et de manière encore plus préférée inférieur à 0,025 ml/g.

- le volume poreux, mesuré par porosimétrie au mercure, compris dans les pores de diamètre supérieur à 200 Å est inférieur à 0,1 ml/g, de préférence inférieur à 0,05 ml/g et de manière encore plus préférée inférieur à 0,025 ml/g.
- le volume poreux, mesuré par porosimétrie au mercure, compris dans les pores de diamètre supérieur à 500 Å est inférieur à 0,01 ml/g.
- le diagramme de diffraction X contient au moins les raies principales caractéristiques d'au moins une des alumines de transition comprise dans le groupe composé par les alumines alpha, rho, chi, kappa, êta, gamma, thêta et delta, de manière préférée caractérisé en ce qu'il contient au moins les raies principales caractéristiques d'au moins une des alumines de transition comprises dans le groupe composé par l'alumine gamma, êta, thêta et delta, de manière plus préférée caractérisé en ce qu'il contient au moins les raies principales caractéristiques de l'alumine gamma et êta et de manière encore plus préférée caractérisé en ce qu'il contient les pics à un d compris entre 1,39 à 1,40 Å et à un d compris entre 1,97 Å à 2,00 Å.

Les spectres RMN MAS du solide de $^{27}$Al des supports montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 110 ppm. Ce massif peut être décomposé en au moins deux espèces. L'espèce prédominante de ce massif correspondraient aux atomes d'$Al_{IV}$ (tétraédrique). Pour les supports et catalyseurs de la présente invention, avantageusement la proportion des $Al_{VI}$ octaédriques est supérieure à 50%, de manière préférée supérieure à 60%, et de manière encore plus préférée supérieure à 70%.

Dans un mode de réalisation de l'invention, le support comprend au moins deux zones silico-aluminiques ayant des rapports Si/Al inférieurs ou supérieurs au rapport Si/Al global déterminé par fluorescence X. Un support selon la présente invention ayant un rapport Si/Al global égal à 0,5 comprend par exemple deux zones silico-aluminiques, l'une des zones a un rapport Si/Al déterminé par MET inférieur à 0,5 et l'autre zone a un rapport Si/Al déterminé par MET compris entre 0,5 et 2,5.

Dans un autre mode de réalisation de l'invention, le support comprend une seule zone silico-aluminique ayant un rapport Si/Al égal au rapport Si/Al global déterminé par fluorescence X et inférieur à 2,3.

L'acidité du support selon l'invention peut être de manière avantageuse, sans que cela ne restreigne la portée de l'invention, mesurée par suivi IR de la thermo-désorption de la pyridine. Généralement, le rapport B/L, tel que décrit ci-dessus, du support selon l'invention est compris entre 0,05 et 1, de manière préférée entre à 0,05 et 0,7, de manière très préférée entre 0,06 et 0,3 et de manière encore plus préférée entre 0,075 et 0,15.

Préparation du support

Le demandeur a découvert que les supports silico-aluminiques obtenus à partir d'un mélange à quelque étape que ce soit d'un composé d'alumine partiellement soluble en milieu acide avec un composé de silice totalement soluble ou avec une combinaison totalement soluble d'alumine et de silice hydratées, mise en forme suivie d'un traitement hydrothermal ou thermique afin de l'homogénéiser à l'échelle micrométrique, voire à l'échelle nanométrique permettait d'obtenir un catalyseur particulièrement actif dans les procédés d'hydrocraquage. Par partiellement soluble en milieu acide, le demandeur entend que la mise en contact du composé d'alumine avant toute addition du composé de silice totalement soluble ou de la combinaison avec une solution acide par exemple d'acide nitrique ou d'acide sulfurique provoque leur dissolution partielle.

Sources de silice

Les composés de silice utilisés selon l'invention peuvent avoir été choisis dans le groupe formé par l'acide silicique, les sols d'acide silicique, les silicates alcalins hydrosolubles, les sels cationiques de silicium, par exemple le métasilicate de sodium hydraté, le Ludox® sous forme ammoniacale ou sous forme alcaline, les silicates d'ammonium quaternaire. Le sol de silice peut être préparé selon l'une des méthodes connues de l'homme de l'art. De manière préférée, une solution d'acide orthosilicique décationisée est préparée à partir d'un silicate alcalin hydrosoluble par échange ionique sur une résine.

Sources de silice-alumines totalement solubles

Les silice-alumines hydratées totalement solubles utilisées selon l'invention peuvent être préparées par coprécipitation vraie en conditions opératoires stationnaires maîtrisées (pH, concentration, température, temps de séjour moyen) par réaction d'une solution basique contenant le silicium, par exemple sous forme de silicate de sodium, optionnellement de l'aluminium par exemple sous forme d'aluminate de sodium avec une solution acide contenant au moins un sel d'aluminium par exemple le sulfate d'aluminium. Au moins un carbonate ou encore du $CO_2$ peut éventuel-

lement être rajouté au milieu réactionnel.

Par coprécipitation vraie, le demandeur entend un procédé par lequel au moins un composé d'aluminium totalement soluble en milieu basique ou acide comme décrit ci-après, au moins un composé de silicium comme décrit ci-après sont mis en contact, simultanément ou séquentiellement, en présence d'au moins un composé précipitant et/ou coprécipitant de façon à obtenir une phase mixte essentiellement constituée de silice-alumine hydratée laquelle est éventuellement homogénéisée par agitation intense, cisaillement, broyage colloïdal ou encore par combinaison de ces opérations unitaires. Par exemple, ces silices-alumines hydratées peuvent avoir été préparées selon les enseignements des brevets américains US 2 908 635; US 3 423 332, US 3 433 747, US 3 451 947, US 3 629 152, US 3 650 988.

La dissolution totale du composé de silice ou de la combinaison a été évaluée de manière approchée selon la méthode suivante. Une quantité fixée (15 g) du composé de silice ou de la combinaison hydratée est introduite dans un milieu de pH préétabli. De manière préférée, la concentration de solide rapporté par litre de suspension est 0,2 mole par litre. Le pH de la solution de dispersion est au moins de 12 et il peut être obtenu par utilisation d'une source alcaline. De manière préférée, il est intéressant d'utiliser NaOH. Le mélange est ensuite agité mécaniquement par un agitateur à turbine de type défloculeuse pendant 30 minutes à 800 t/min. Une fois, l'agitation terminée, le mélange est centrifugé 10 minutes à 3000 t/min. Le gâteau est séparé du liquide surnageant. La solution a été filtré sur un filtre de porosité 4 de diamètre 19 cm. On procède ensuite au séchage puis à la calcination à 1000°C des 2 fractions. Puis, on définit un rapport R égal en divisant la masse décantée par la masse de solide en suspension. Par totalement soluble, on entend un rapport R au moins supérieur à 0,9.

Sources d'alumine

Les composés d'alumine utilisés selon l'invention sont partiellement solubles en milieu acide. Ils sont choisis tout ou en partie dans le groupe des composés d'alumine de formule générale $Al_2O_3$, $nH_2O$. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rho, chi, eta, gamma, kappa, thêta, et delta, qui se différencient essentiellement par l'organisation de leur structure cristalline. L'alumine alpha appelée communément corindon peut être incorporée dans une faible proportion dans le support selon l'invention.

Cette propriété de dissolution partielle est une propriété recherchée de l'invention, elle s'applique aux poudres d'alumine hydratées, aux poudres atomisées d'alumine hydratées, aux dispersions ou suspensions d'alumine hydratées ou à l'une quelconque de leur combinaison, avant une quelconque addition d'un composé contenant tout ou en partie du silicium.

La dissolution partielle du composé d'alumine a été évaluée de manière approchée selon la méthode suivante. Une quantité précise du composé d'alumine en poudre ou en suspension est introduite dans un milieu de pH préétabli. Le mélange est ensuite agité mécaniquement. Une fois, l'agitation terminée, le mélange est laissé sans agitation durant 24 heures. De manière préférée, la concentration de solide en $Al_2O_3$ rapportée par litre de suspension est 0,5 mole par litre. Le pH de la solution de dispersion est de 2 et est obtenu soit par utilisation de $HNO_3$, soit de HCl, soit de $HClO_4$. De manière préférée, il est intéressant d'utiliser $HNO_3$. La répartition des fractions sédimentées et dissoutes a été suivie par dosage de l'aluminium par absorption UV. Les surnageants ont été ultrafiltrés (membrane de polyetherssulfones, Millipore NMWL : 30 000) et digérés dans de l'acide concentré. La quantité d'aluminium dans le surnageant correspond au composé d'alumine non sédimentée et à l'aluminium dissous et la fraction ultrafiltrée à l'aluminium dissous uniquement. La quantité de particules sédimentées est déduite de la concentration théorique en aluminium dans la dispersion (en considérant que tout le solide introduit est dispersé) et des quantités de boehmite réellement dispersées et d'aluminium en solution.

Les précurseurs d'alumine utilisés selon la présente invention se distinguent donc de ceux utilisés dans le cas des co-précipitations vraies, qui sont entièrement solubles en milieu acide : sels cationiques d'alumine, par exemple le nitrate d'aluminium. Les méthodes faisant partie de l'invention se distinguent des co-précipitations vraies car l'un des éléments, en l'occurrence le composé d'aluminium, est partiellement soluble.

Pour mettre en oeuvre l'alumine, tout composé d'alumine de formule générale $Al_2O_3$, $nH_2O$ peut être utilisé. Sa surface spécifique est comprise entre 150 et 600 m²/g. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut également mettre en oeuvre les formes déshydratées de ces composés qui sont constitués d'alumines de transition et qui comportent au moins une des phases prises dans le groupe : rho, chi, eta, gamma, kappa, thêta, delta et alpha, qui se différencient essentiellement par l'organisation de leur structure cristalline. Lors de traitements thermiques, ces différentes formes sont susceptibles d'évolution entre elles, selon une filiation complexe qui dépend des conditions opératoires du traitement. On peut également utiliser dans des proportions mesurées l'alumine alpha appelée communément corindon.

L'hydrate d'aluminium $Al_2O_3$, $nH_2O$ utilisé de manière plus préférentielle est la boehmite, la pseudo-boehmite et les gels d'alumine amorphe ou essentiellement amorphe. Un mélange de ces produits sous quelque combinaison que ce soit peut être également utilisé.

La boehmite est généralement décrite comme un monohydrate d'aluminium de formule $Al_2O_3$, $nH_2O$ qui englobe en réalité un large continuum de matériaux de degré d'hydratation et d'organisation variables avec des frontières plus ou moins bien définies : la boehmite gélatineuse la plus hydratée, avec n pouvant être supérieur à 2, la pseudo-boehmite ou la boehmite micro-cristalline avec n compris entre 1 et 2, puis la boehmite cristalline et enfin la boehmite bien cristallisée en gros cristaux avec n voisin de 1. La morphologie du monohydrate d'aluminium peut varier dans de larges limites entre ces deux formes extrêmes aciculaire ou prismatique. Tout un ensemble de forme variables peut être utilisé entre ces deux formes : chaîne, bateaux, plaquettes entrelacées.

La préparation et/ou la mise en forme de l'hydrate d'aluminium peuvent ainsi constituer la première étape de la préparation de ces catalyseurs. De nombreux brevets relatent la préparation et/ou la mise en forme de supports à base d'alumine de transition issues de monohydrate d'aluminium: US 3 520 654 ; US 3 630 670 ; US 3 864 461 ; US 4 154 812 ; US 4 313 923 ; DE 3243193 ; US 4 371 513.

Des hydrates d'aluminium relativement purs peuvent être utilisés sous forme de poudre, amorphes ou cristallisés ou cristallisés contenant une partie amorphe. L'hydrate d'aluminium peut également être introduit sous forme de suspensions ou dispersions aqueuses. Les suspensions ou dispersions aqueuses d'hydrate d'aluminium mise en oeuvre selon l'invention peuvent être gélifiables ou coagulables. Les dispersions ou suspensions aqueuses peuvent également être obtenues ainsi qu'il est bien connu de l'homme de l'art par peptisation dans l'eau ou l'eau acidulée d'hydrates d'aluminium.

La dispersion d'hydrate d'aluminium peut être réalisée par tout procédé connu de l'homme de l'art: dans un réacteur en batch, un mélangeur en continu, un malaxeur, un broyeur colloïdal. Un tel mélange peut être également réalisé dans un réacteur à écoulement piston et, notamment dans un mélangeur statique. On peut citer les réacteurs Lightnin.

En outre, on peut également mettre en oeuvre comme source d'alumine une alumine ayant été soumise au préalable à un traitement susceptible d'améliorer son degré de dispersion. A titre d'exemple, on pourra améliorer la dispersion de la source d'alumine par un traitement d'homogénéisation préliminaire. Par homogénéisation, on peut utiliser au moins un des traitements d'homogénéisation décrit dans le texte qui suit.

Les dispersions ou suspensions aqueuses d'alumine que l'on peut mettre en oeuvre sont notamment les suspensions ou dispersions aqueuses de boehmites fines ou ultra-fines qui sont composés de particules ayant des dimensions dans le domaine colloïdal.

Les boehmites fines ou ultra-fines mises en oeuvre selon la présente invention peuvent notamment avoir été obtenues selon le brevet français FR - 1 261 182 et FR - 1 381 282 ou dans la demande de brevet européen EP 15 196.

On peut mettre en oeuvre également les suspensions ou dispersions aqueuses obtenues à partir de pseudo-boehmite, de gels d'alumine amorphe, de gels d'hydroxyde d'aluminium ou d'hydrargillite ultra-fine.

Le monohydrate d'aluminium peut être acheté parmi une variété de sources commerciales d'alumine telle que notamment les PURAL®, CATAPAL®, DISPERAL®, DISPAL® commercialisée par la société SASOL ou encore HIQ® commercialisée par ALCOA, ou selon les méthodes connues de l'homme de l'art : elle peut être préparée par déshydratation partielle de trihydrate d'aluminium par des méthodes conventionnelles ou elle peut être préparée par précipitation. Lorsque ces alumines se présentent sous forme d'un gel, elles sont peptisées par l'eau ou une solution acidulée. Dans la précipitation, la source acide peut-être par exemple choisie parmi au moins un des composés suivants : le chlorure d'aluminium, le sulfate d'aluminium, le nitrate d'aluminium. La source basique d'aluminium peut être choisie parmi les sels basiques d'aluminium tels que l'aluminate de sodium et l'aluminate de potassium.

Comme agents précipitants, l'hydroxyde de sodium, le carbonate de sodium, la potasse et l'ammoniaque peuvent être utilisés. Les agents précipitants sont choisis de telle manière que la source d'alumine selon la présente invention et ces agents soient précipités ensemble.

Selon la nature acide ou basique du composé de départ à base d'aluminium, on précipite l'hydrate d'aluminium à l'aide d'une base ou d'un acide choisi, par exemple parmi l'acide chlorhydrique, l'acide sulfurique, la soude ou un composé basique ou acide de l'aluminium tel que cités ci-dessus. Les deux réactifs peuvent être le sulfate d'aluminium et l'aluminate de soude. Pour un exemple de préparation de alpha-monohydrate d'aluminium utilisant le sulfate d'aluminium et l'aluminate de soude, on peut se référer notamment au brevet US 4 154 812.

La pseudo-boehmite peut notamment avoir été préparée selon le procédé décrit dans le brevet américain US 3 630 670 par réaction d'une solution d'aluminate alcalin avec une solution d'un acide minéral. La pseudo-boehmite peut notamment avoir été préparée selon le procédé décrit dans le brevet américain US 3 630 670 par réaction d'une solution d'aluminate alcalin avec une solution d'un acide minéral. Elle peut également avoir été préparée tel que décrit dans le brevet français FR 1 357 830.

Les gels d'alumine amorphe peuvent notamment avoir été préparés selon les procédés décrits dans l'article "Alcoa paper n°19 (1972) pages 9 à 12" et notamment par réaction d'aluminate d'acide ou d'un sel d'aluminium ou par hydrolyse d'alcoolates d'aluminium ou par hydrolyse de sels basiques d'aluminium.

Les gels d'hydroxyde d'aluminium peuvent notamment être ceux qui ont été préparés selon les procédés décrits dans les brevets américains US 3 268 295 et US 3 245 919.

Les gels d'hydroxyde d'aluminium peuvent notamment être ceux préparés selon les procédés décrits dans le brevet WO 00/01617, par mélange d'une source acide d'aluminium et d'une base ou d'une source basique d'aluminium et d'un acide de manière à précipiter un monohydrate d'alumine, les étapes suivantes étant :

2. mûrissement
3. filtration
4. lavage, et
5. séchage,

procédés caractérisés en ce que le mélange de l'étape une est réalisé sans rétromélange.

L'hydrargilite ultra-fine peut notamment avoir été préparée selon le procédé décrit dans le brevet US 1 371 808, par évolution à une température comprise entre la température ambiante et 60°C de gels d'alumine sous forme de gâteau et contenant par rapport à l'alumine compté en molécules d'Al$_2$O$_3$ 0,1 ions acides monovalents.

On peut également mettre en oeuvre les suspensions ou dispersions aqueuses de boehmite ou de pseudo-boehmite ultra-pures préparées selon un procédé dans lequel on effectue la réaction d'un aluminate alcalin avec de l'anhydride carbonique pour former un précipité d'hydroxycarbonate d'aluminium amorphe, on sépare le précipité obtenu par filtration puis on lave celui-ci (le procédé est notamment décrit dans le brevet américain US 3 268 295).

Ensuite,

a) dans une première étape, on mélange le précipité lavé d'hydroxycarbonate d'aluminium amorphe avec une solution acide, d'une base ou d'un sel ou de leurs mélanges; ce mélange est effectué en versant la solution sur l'hydroxycarbonate, le pH du milieu ainsi constitué étant inférieur à 11,
b) dans une deuxième étape, on chauffe le milieu réactionnel ainsi constitué à une température inférieure à 90°C pendant un temps d'au moins 5 minutes
c) dans une troisième étape, on chauffe le milieu résultant de la deuxième étape à une température comprise entre 90°C et 250°C.

Les dispersions ou suspensions de boehmite et pseudo-boehmite obtenus selon ce procédé présentent une teneur en alcalins inférieure à 0,005% exprimée sous forme de rapport pondéral oxyde du métal alcalin /Al$_2$O$_3$.

Lorsqu'on désire fabriquer des supports de catalyseurs très purs, on utilise de préférence des suspensions ou dispersions de boehmites ou de pseudo-boehmites ultra-pures qui ont été obtenues selon le procédé qui a été décrit ci-dessus, ou les gels d'hydroxyde d'aluminium qui ont été préparés à partir de l'hydrolyse des alcoolates d'aluminium selon un procédé du type décrit dans le brevet américain US 2 892 858.

On décrit sommairement le procédé de fabrication qui conduit à de tels gels d'hydroxyde d'aluminium de type boehmite obtenue comme sous-produit dans la fabrication de l'alcool par hydrolyse d'un alcoolate ou alcoxyde d'aluminium (synthèse de Ziegler). Les réactions de synthèse d'alcools Ziegler sont décrites notamment dans le brevet américain US 2 892 858. Selon ce procédé, on prépare tout d'abord le triéthylaluminium à partir d'aluminium, d'hydrogène et d'éthylène, la réaction étant réalisée en deux étapes avec recyclage partiel du triéthylaluminium.

On ajoute de l'éthylène dans l'étape de polymérisation et on oxyde ensuite le produit obtenu en alcoolate d'aluminium, les alcools étant obtenus par hydrolyse.

Les gels d'hydroxyde d'aluminium peuvent également être ceux qui ont été préparés selon les procédés décrits dans les brevets américains US 4 676 928-A et US 6 030 599.

L'alumine hydratée obtenue comme sous-produit de la réaction de Ziegler est notamment décrite dans un bulletin de la société CONOCO du 19 janvier 1971.

La dimension des particules d'alumine constituant la source d'alumine peut varier dans de larges limites. Elle est généralement comprise entre 1 et 100 microns.

Méthodes

Le support peut être avantageusement préparé par l'une des méthodes décrites ci-après.

A titre d'exemple, une méthode de préparation d'une silice-alumine faisant partie de l'invention consiste à préparer à partir d'un silicate alcalin hydrosoluble une solution d'acide orthosilicique (H$_2$SiO$_4$, H$_2$O) décationisée par échange ionique puis à l'ajouter simultanément à un sel cationique d'aluminium en solution par exemple le nitrate et à de l'ammoniaque dans des conditions opératoires contrôlées ; ou encore ajouter la solution d'acide orthosilicique au sel cationique d'aluminium en solution et à coprécipiter la solution obtenue obtenue par de l'ammoniaque dans des conditions opératoires contrôlées conduisant à un produit homogène. Cet hydrogel de silice-alumine est mélangé avec de la poudre ou une suspension d'hydrate d'aluminium. Après filtration et lavage, séchage avec mise en forme puis calcination préférentiellement sous air, en four rotatif, à température élevée et pendant un temps suffisant pour favoriser les interactions entre l'alumine et la silice, généralement au moins 2 heures, un support répondant aux caractéristiques de l'invention est obtenu.

Une autre méthode de préparation de silice-alumine selon l'invention consiste à précipiter l'hydrate d'alumine comme ci-avant, à le filtrer et le laver puis à le mélanger avec l'acide orthosilicique aqueux de façon à obtenir une suspension, laquelle est intimement homogénéisée par forte agitation et cisaillement. Une turbine Ultraturrax ou encore une turbine Staro peut être utilisée, ou encore un broyeur colloïdal par exemple, un broyeur colloïdal Staro. La suspension homogène est alors séchée par atomisation comme ci-avant puis calcinée entre 500 et 1200°C pendant au moins 3 heures : un support silice-alumine utilisable dans le procédé selon l'invention est obtenu.

Une autre méthode faisant partie de l'invention consiste à préparer comme ci-avant une solution décationisée d'acide orthosilicique puis à l'ajouter simultanément ou consécutivement à un composé d'alumine, par exemple un hydrate d'aluminium en poudre ou en suspension acidulée. Afin d'augmenter le diamètre des pores du support silice-alumine final, au moins un composé basique peut éventuellement être rajouté au milieu réactionnel. Après une homogénéisation poussée de la suspension par agitation, ajustement éventuel par filtration de la teneur en matière sèche puis éventuellement ré-homogénéisation, le produit est séché avec mise en forme simultanément ou consécutivement, puis calciné comme ci-avant.

Une autre méthode faisant également partie de l'invention consiste à préparer une suspension ou une dispersion aqueuse d'alumine, par exemple un monohydrate d'aluminium puis à l'ajouter simultanément ou consécutivement à un composé de silice, par exemple un silicate de sodium. Afin d'augmenter le diamètre des pores du support silice-alumine final, au moins un composé basique peut éventuellement être rajouté au milieu réactionnel. Le support est obtenu par filtration et lavage, éventuellement lavage par une solution ammoniacale pour extraire par échange ionique le sodium résiduel, séchage avec mise en forme simultanément ou consécutivement. Après séchage avec mise en forme puis calcination comme ci-avant, un support répondant aux caractéristiques de l'invention est obtenu. La taille des particules d'alumine utilisée est de préférence comprise entre 1 et 100 microns pour obtenir une bonne homogénéisation du support silice-alumine selon l'invention.

Pour augmenter le diamètre des mésopores du support silice-alumine, il peut être particulièrement avantageux comme nous l'enseigne le brevet américain US 4 066 574 de préparer une suspension ou une dispersion aqueuse d'alumine, par exemple un monohydrate d'aluminium puis de neutraliser par une solution basique, par exemple de l'ammoniaque, puis à l'ajouter simultanément ou consécutivement à un composé de silice par exemple une solution décationisée d'acide orthosilicique. Après une homogénéisation poussée de la suspension par agitation intense, ajustement éventuel par filtration de la teneur en matière sèche puis ré-homogénéisation, le produit est séché avec mise en forme simultanément ou consécutivement, puis calciné comme ci-avant. Cette méthode fait également partie des méthodes utilisées selon l'invention.

Dans l'exposé des méthodes précitées, on emploie homogénéisation pour décrire la remise en solution d'un produit contenant une fraction solide par exemple une suspension, une poudre, un précipité filtré, puis sa dispersion sous agitation intense. L'homogénéisation d'une dispersion est un procédé bien connu de l'homme du métier. La dite-homogénéisation peut être réalisée par tout procédé connu de l'homme de l'art: à titre d'exemple dans un réacteur en batch, un mélangeur en continu, un malaxeur. Un tel mélange peut être réalisé dans un réacteur à écoulement piston et, notamment dans un réacteur statique. On peut citer les réacteurs Lightnin. Une turbine Ultraturrax® ou encore une turbine Staro® peut être utilisée, ou encore un broyeur colloïdal par exemple, un broyeur colloïdal Staro. Les broyeurs colloïdaux commerciaux IKA® peuvent être aussi utilisés.

Dans l'ensemble des méthodes précitées, il peut être éventuellement souhaitable d'ajouter, lors d'une étape quelconque de la préparation, une proportion mineure d'au moins un élément stabilisant choisi dans le groupe formé par la zircone et le titane. L'élément stabilisant est de préférence ajouté sous forme d'un sel soluble.

<u>Mise en forme des supports et catalyseurs</u>

Le support peut être obtenu par mise en forme de la silice-alumine par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

La mise en forme peut également être réalisée en présence des différents constituants du catalyseur et extrusion de la pâte minérale obtenue, par pastillage, mise en forme sous forme de billes au drageoir tournant ou au tambour, coagulation en goutte, oil-drop, oil-up, ou tout autre procédé connu d'agglomération d'une poudre contenant de l'alumine et éventuellement d'autres ingrédients choisis parmi ceux mentionnés ci-dessus.

Les catalyseurs utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Par ailleurs, ces supports mis en oeuvre selon la présente invention peuvent avoir été traités ainsi qu'il est bien connu de l'homme de l'art par des additifs pour faciliter la mise en forme et/ou améliorer les propriétés mécaniques finales des supports silico-aluminiques. A titre d'exemple d'additifs, on peut citer notamment la cellulose, la carboxyméthyl-cellulose, la carboxy-ethyl-cellulose, du tall-oil, les gommes xanthaniques, des agents tensio-actifs, des agents flocculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristiques des supports de l'invention est opéré partiellement lors de cette étape de mise en forme des particules de supports.

La mise en forme peut être réalisée en utilisant les techniques de mise en forme des catalyseurs, connues de l'homme de l'art, telles que par exemple: extrusion, dragéification, séchage par atomisation ou encore pastillage.

On peut ajouter ou retirer de l'eau pour ajuster la viscosité de la pâte à extruder. Cette étape peut être réalisée à tout stade de l'étape de malaxage.

Pour ajuster la teneur en matière solide de la pâte à extruder afin de la rendre extrudable, on peut également ajouter un composé majoritairement solide et de préférence un oxyde ou un hydrate. On utilisera de manière préférée un hydrate et de manière encore plus préférée un hydrate d'aluminium. La perte au feu de cet hydrate sera supérieure à 15%. La teneur en acide ajouté au malaxage avant la mise en forme est inférieure à 30%, de préférence comprise entre 0,5 et 20% poids de la masse anhydre en silice et alumine engagée dans la synthèse.

L'extrusion peut être réalisée par n'importe quel outil conventionnel, disponible commercialement. La pâte issue du malaxage est extrudée à travers une filière, par exemple à l'aide d'un piston ou d'une mono-vis ou double vis d'extrusion. Cette étape d'extrusion peut être réalisée par toute méthode connue de l'homme de métier.

Les extrudés de support selon l'invention ont généralement une résistance à l'écrasement d'au moins 70 N/cm et de manière préférée supérieure ou égale à 100 N/cm.

Calcination du support

Le séchage est effectué par toute technique connue de l'homme du métier.

Pour obtenir le support de la présente invention, il est préférable de calciner de préférence en présence d'oxygène moléculaire, par exemple en effectuant un balayage d'air, à une température inférieure ou égale à 1100°C. Au moins une calcination peut être effectuée après l'une quelconque des étapes de la préparation. Ce traitement par exemple peut être effectué en lit traversé, en lit léché ou en atmosphère statique. Par exemple, le four utilisé peut être un four rotatif tournant ou être un four vertical à couches traversées radiales. Les conditions de calcination: température et durée dépendent principalement de la température maximale d'utilisation du catalyseur. Les conditions préférées de calcination se situant entre plus d'une heure à 200°C à moins d'une heure à 1100°C. La calcination peut être opérée en présence de vapeur d'eau. La calcination finale peut être éventuellement effectuée en présence d'une vapeur acide ou basique. Par exemple, la calcination peut être réalisé sous pression partielle d'ammoniaque.

Traitements post-synthèse

Des traitements post-synthèse peuvent être effectués, de manière à améliorer les propriétés du support, notamment son homogénéité telle que définie précédemment.

Selon l'invention, le support peut ainsi être éventuellement soumis à un traitement hydrothermal en atmosphère confinée. On entend par traitement hydrothermal en atmosphère confinée un traitement par passage à l'autoclave en présence d'eau sous une température supérieure à la température ambiante.

Au cours de ce traitement hydrothermal, on peut traiter de différentes manières la silice-alumine mise en forme. Ainsi, on peut imprégner la silice alumine d'acide, préalablement à son passage à l'autoclave, l'autoclavage de la silice-alumine étant fait soit en phase vapeur, soit en phase liquide, cette phase vapeur ou liquide de l'autoclave pouvant être acide ou non. Cette imprégnation, préalable à l'autoclavage, peut être acide ou non. Cette imprégnation, préalable à l'autoclavage peut être effectuée à sec ou par immersion de la silice-alumine dans une solution aqueuse acide. Par imprégnation à sec, on entend mise en contact de l'alumine avec un volume de solution inférieur ou égal au volume poreux total de l'alumine traitée. De préférence, l'imprégnation est réalisée à sec.

L'autoclave est de préférence un autoclave à panier rotatif tel que celui défini dans la demande brevet EP-A-0 387 109.

La température pendant l'autoclavage peut être comprise entre 100 et 250°C pendant une période de temps comprise entre 30 minutes et 3 heures.

Procédés d'hydrocraquage

L'invention concerne également les procédés d'hydrocraquage mettant en oeuvre les catalyseurs d'hydrocraquage selon l'invention, les dits procédés couvrant les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa. De façon générale, les catalyseurs selon l'invention sont utilisés pour le traitement des coupes hydrocarbonées. Les catalyseurs selon l'invention sont utilisés avantageusement pour l'hydrocraquage et/ou l'hydroconversion de coupes hydrocarbonées.

Le catalyseur de la présente invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur de la présente invention.

Le catalyseur de la présente invention peut être utilisé seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du catalyseur de la présente invention.

Le lit bouillonnant s'opère avec retrait de catalyseur usé et ajout journalier de catalyseur neuf afin de conserver une activité du catalyseur stable.

Dans un schéma d'hydrocraquage dit en deux étapes avec séparation intermédiaire entre les deux zones réactionnelles, dans une étape donnée, le catalyseur de la présente invention peut-être utilisé dans l'un ou dans les deux réacteurs en association ou non avec un catalyseur d'hydroraffinage situé en amont du catalyseur de la présente invention.

Procédé dit en une étape

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Mode de réalisation : Procédé dit en une étape en lit fixe

Pour les catalyseurs à faible teneur en silice, les teneurs pondérales en silice du support entrant dans la composition du catalyseur sont comprises entre 5 et 30% et de préférence entre 5 et 20%. Pour les catalyseurs à forte teneur en silice, les teneurs pondérales en silice du support entrant dans la composition du catalyseur sont comprises entre 20 et 80% et de préférence entre 30 et 60%.

Dans le cas où le catalyseur selon la présente invention est utilisé en amont d'un catalyseur zéolithique d'hydrocraquage, par exemple à base de zéolithe Y, on utilisera avantageusement un catalyseur présentant une faible teneur pondérale en silice telle que définie précédemment. Il pourra aussi être avantageusement utilisé en association avec un catalyseur d'hydroraffinage, ce dernier étant situé en amont du catalyseur de la présente invention.

Lorsque le catalyseur selon la présente invention est utilisé en amont d'un catalyseur d'hydrocraquage à base de silice-alumine ou à base de zéolite, dans le même réacteur dans des lits catalytiques distincts ou dans des réacteurs distincts, la conversion est généralement (ou de préférence) inférieure à 50% poids et de manière préférée inférieure à 40%.

Mode de réalisation : Procédé dit en une étape en lit bouillonnant

Le catalyseur selon l'invention peut être utilisé seul dans un ou plusieurs réacteurs.

Dans le cadre d'un tel procédé, on pourra utiliser avantageusement plusieurs réacteurs en série, le ou les réacteurs en lit bouillonnant contenant le catalyseur selon l'invention étant précédé d'un ou plusieurs réacteurs contenant au moins un catalyseur d'hydroraffinage en lit fixe ou en lit bouillonnant.

Lorsque le catalyseur selon la présente invention est utilisé en aval d'un catalyseur d'hydroraffinage, la conversion de la fraction de la charge occasionnée par ce catalyseur d'hydroraffinage est généralement (ou de préférence) inférieure à 30% poids et de manière préférée inférieure à 25%.

Mode de réalisation : Procédé dit en une étape en lit fixe avec flash chaud

Le catalyseur selon la présente invention peut aussi être utilisé dans un procédé d'hydrocraquage dit en une étape comportant une zone d'hydroraffinage, une zone permettant l'élimination partielle de l'ammoniac, par exemple par un flash chaud, et une zone comportant un catalyseur d'hydrocraquage. Ce procédé d'hydrocraquage de charges hydrocarbonées en une étape pour la production de distillats moyens et éventuellement de bases huiles comporte au moins une première zone réactionnelle incluant un hydroraffinage, et au moins une deuxième zone réactionnelle, dans laquelle est opéré l'hydrocraquage d'au moins une partie de l'effluent de la première zone réactionnelle. Ce procédé comporte également une séparation incomplète de l'ammoniac de l'effluent sortant de la première zone. Cette séparation est avantageusement effectuée au moyen d'un flash chaud intermédiaire. L'hydrocraquage opéré en deuxième zone réactionnelle est réalisé en présence d'ammoniac en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote. Le catalyseur de la présente invention est utilisé de préférence dans la zone réactionnelle d'hydrocraquage en association ou non avec un catalyseur d'hydroraffinage situé en amont du catalyseur de la présente invention.

Le catalyseur selon l'invention peut être utilisé soit dans la première zone réactionnelle en prétraitement convertissant, seul ou en association avec un catalyseur d'hydroraffinage classique, situé en amont du catalyseur selon l'invention, dans un ou plusieurs lits catalytiques, dans un ou plusieurs réacteurs.

Mode de réalisation : Procédé d'hydrocraquage dit en une étape avec hydroraffinage préliminaire sur catalyseur d'acidité faible.

Le catalyseur selon l'invention peut être utilisé dans un procédé d'hydrocraquage comprenant :

- une première zone réactionnelle d'hydroraffinage dans laquelle la charge est mise en contact avec au moins un catalyseur d'hydroraffinage présentant dans le test standard d'activité un taux de conversion du méthylcyclohexane inférieur à 10 % massique.
- une deuxième zone réactionnelle d'hydrocraquage dans laquelle une partie au moins de l'effluent issu de l'étape d'hydroraffinage est mise en contact avec au moins un catalyseur d'hydrocraquage non zéolitique selon l'invention présentant dans le test standard d'activité un taux de conversion du méthylcyclohexane supérieur à 10 % massique. La proportion du volume catalytique de catalyseur d'hydroraffinage représente 20 à 45% du volume catalytique total.

L'effluent issu de la première zone réactionnelle est au moins en partie, de préférence en totalité, introduit dans la deuxième zone réactionnelle dudit procédé. Une séparation intermédiaire des gaz peut être réalisée.

L'effluent en sorte de deuxième zone réactionnelle est soumis à une séparation dite finale (par exemple par distillation atmosphérique éventuellement suivie d'une distillation sous vide), de manière à séparer les gaz. Il est obtenu au moins une fraction liquide résiduelle, contenant essentiellement des produits dont le point d'ébullition est généralement supérieur à 340°C, qui peut être au moins en partie recyclée en amont de la deuxième zone réactionnelle du procédé selon l'invention, et de préférence en amont du catalyseur d'hydrocraquage à bas de silice-alumine, dans un objectif de production de distillats moyens.

La conversion en produits ayant des points d'ébullition inférieurs à 340°C, ou encore inférieurs à 370°C est d'au moins 50% poids.

Le test standard d'activité a pour but de mesurer l'activité des catalyseurs en conversion du méthylcyclohexane dans les conditions opératoires suivantes :

Le catalyseur est au préalable sulfuré sous une pression de 06 bar, à 350°C au moyen d'un mélange dit réactionnel comportant 0.5% massique d'aniline, 1.5% massique de diméthyldisulfure et de 98% massique de méthylcyclohexane, durant 4 heures. Puis toujours sous le même flux réactionnel en ajoutant de l'hydrogène et dans les conditions opératoires suivantes : Pression de 60 bar, vitesse spatiale VVh de $1h^{-1}$, rapport H2/mélange réactionnel : 1000 Nl d'hydrogène/l mélange réactionnel liquide (Nl = normaux litres), la température est amenée progressivement à une température de réaction de 380°C.

Dans ces conditions opératoires, un catalyseur est considéré comme présentant une faible acidité s'il conduit à un taux de conversion du méthylcyclohexane inférieure à 10% massique et de préférence inférieur à 5 %.

La conversion du réactif méthylcyclohexane est définie comme la transformation de ce dernier en produits d'isomérisation à 7 atomes de carbone, comme par exemple les diméthylcyclopentanes, en produits d'ouverture de cycle et en produits de craquage. La conversion du méthylcyclohexane, telle que définie, prend donc en compte tous les produits différents du méthylcyclohexane. L'obtention de l'ensemble de ces produits nécessite la présence d'une fonction acide plus ou moins forte sur le catalyseur.

Mode de réalisation : Procédé dit en deux étapes

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillat moyen (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en $NH_3$ ainsi qu'en composés azotés organiques, en général moins de 20 ppm poids voire moins de 10 ppm poids.

La même configuration de lits catalytiques en lit fixe ou en lit bouillonnant peut être utilisée dans la première étape d'un schéma dit en deux étapes, que le catalyseur soit utilisé seul ou en association avec un catalyseur d'hydroraffinage classique.

Pour les procédés dits en une étape et pour la première étape des procédés d'hydrocraquage en deux étapes, les catalyseurs préférés selon l'invention sont les catalyseurs à base d'éléments du groupe VIII non nobles, de manière encore plus préférée les catalyseurs à base de nickel et de tungstène.

Les catalyseurs utilisés dans la deuxième étape des procédés d'hydrocraquage en deux étapes sont de préférence les catalyseurs à base d'éléments nobles du groupe VIII, de manière encore plus préférée les catalyseurs à base de platine et/ou de palladium.

Des charges très variées peuvent être traitées par les procédés d'hydrocraquage selon l'invention décrits ci-dessus et généralement elles contiennent au moins 20% volume et souvent au moins 80% volume de composés bouillant au-dessus de 340°C.

La charge peut être par exemple des LCO (light cycle oil), des distillats atmosphériques, des distillats sous vide par exemple gasoils issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, ou encore la charge peut être une huile désasphaltée, ou encore tout mélange des charges précédemment citées. La liste ci-dessus n'est pas limitative. Les paraffines issues du procédé Fischer-Tropsch sont exclues. En général, les charges ont un point d'ébullition T5 supérieur à 340°C, et mieux encore supérieur à 370°C, c'est à dire que 95% des composés présents dans la charge ont un point d'ébullition supérieur à 340°C, et mieux encore supérieur à 370°C.

La teneur en azote des charges traitées dans les procédés selon l'invention est usuellement supérieure à 500 ppm, de préférence comprise entre 500 et 5000 ppm poids, de manière plus préférée entre 700 et 4000 ppm poids et de manière encore plus préférée entre 1000 et 4000 ppm, et la teneur en soufre entre 0,01 et 5% poids, plus généralement entre 0,2 et 4%.

La teneur cumulée en nickel et vanadium des charges traitées dans les procédés selon l'invention est de préférence inférieure à 1 ppm poids.

Préalablement à l'injection de la charge, les catalyseurs utilisés dans le procédé selon la présente invention sont de préférence soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'homme du métier consiste à chauffer en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

Les conditions opératoires de l'hydrocraquage telles que température, pression, taux de recyclage d'hydrogène, vitesse spatiale horaire, pourront être très variables en fonction de la nature de la charge, de la qualité des produits désirés et des installations dont dispose le raffineur. Le catalyseur d'hydrocraquage est mis en contact, en présence d'hydrogène, avec les charges décrites précédemment, à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20h$^{-1}$ et de préférence 0,1-6h$^{-1}$, de préférence, 0,2-3h$^{-1}$, et la quantité d'hydrogène introduite est telle que le rapport volumique litre d'hydrogène / litre d'hydrocarbure soit compris entre 80 et 5000l/l et le plus souvent entre 100 et 2000 l/l.

Ces conditions opératoires utilisées dans le procédé selon l'invention permettent d'atteindre des conversions par passe, en produits ayant des points d'ébullition inférieurs à 340°C, et mieux inférieurs à 370°C, supérieures à 15% et de manière encore plus préférée comprises entre 20 et 95%.

Les exemples suivants illustrent la présente invention sans toutefois en limiter la portée.

Exemple 1 : Préparation et mise en forme d'une silice-alumine conforme à l'invention (SA1)

La silice-alumine SA1 conforme à l'invention est préparée à partir d'une silice-alumine totalement soluble obtenue par toute technique connue de l'homme du métier, à laquelle on ajoute une solution de silicate de sodium. La façon d'opérer est la suivante : dans un premier temps une solution d'acide sulfurique 30% est ajoutée à une solution de silicate de sodium. La quantité d'$H_2SO_4$ est définie de manière à travailler à un taux de neutralisation fixé. L'addition se fait en deux minutes sous une agitation de 600 tours/minutes. La température de synthèse est de 60°C. La durée de mûrissement a été fixée à 30 minutes. L'agitation est maintenue à 600 tours/minutes, la température est celle de l'étape précédente. Puis, on ajoute $Al_2(SO_4)_3$ (500 ml), la concentration est fixée par la teneur en alumine désirée. Le pH n'est pas régulé et est fixé par la teneur en alumine désirée. L'ajout se fait en 10 minutes. L'agitation est toujours fixée à 600 tours/minute, la température est la même que celle des étapes précédentes. Puis, on ajoute l'ammoniaque. Le gel obtenu est filtré par déplacement. Le lavage se fait à l'eau à 60°C, 3 kg d'eau par kg de solide contenu dans le gel. Puis un échange au nitrate d'ammonium $NH_4NO_3$ (138,5 g/l) à 60°C et 1,5 l par kg de solide contenu dans le gel est effectué. Enfin, un lavage supplémentaire à l'eau à 60°C est fait par déplacement, 3 kg d'eau par kg de solide contenu dans le gel. Le gel issu de cette étape est mélangé avec de la poudre de boehmite Pural de façon à ce que la composition finale du support mixte en produit anhydre soit, à ce stade de la synthèse, égale à 50% $Al_2O_3$-50% $SiO_2$. Le malaxage se fait sur un malaxeur bras en Z. L'extrusion est réalisée par passage de la pâte au travers d'une filière munie d'orifices de diamètre 1,4 mm. Les extrudés ainsi obtenus sont séchés à 150°C, calcinés à 550°C, puis calcinés à 700°C en présence de vapeur d'eau.

Les caractéristiques du support sont les suivantes :

La composition du support est 50,12 % $Al_2O_3$- 49,88 % $SiO_2$.

La surface BET est de 254 $m^2$/g.

Le volume poreux total, mesuré par adsorption d'azote, est de 0,43 ml/g.

Le diamètre poreux moyen, mesuré par porosimétrie au mercure, est de 65 Å.

Le rapport entre le volume V2, mesuré par porosimétrie au mercure, compris entre le $D_{moyen}$ - 30 Å et le $D_{moyen}$ + 30 Å sur le volume mercure total est de 0,91.

Le volume V3, mesuré par porosimétrie au mercure, compris dans les pores de diamètre supérieur à $D_{moyen}$ + 30 Å est de 0,03 ml/g.

Le volume V6, mesuré par porosimétrie au mercure, compris dans les pores de diamètre supérieur à $D_{moyen}$ + 15 Å est de 0,047 ml/g,

Le rapport entre la surface adsorption et la surface BET est de 0,76.

Le volume poreux, mesuré par porosimétrie au mercure, compris dans les pores de diamètre supérieur à 140 Å est de 0,015 ml/g,

Le volume poreux, mesuré par porosimétrie au mercure, compris dans les pores de diamètre supérieur à 160 Å est de 0,013 ml/g,

Le volume poreux, mesuré par porosimétrie au mercure, compris dans les pores de diamètre supérieur à 200 Å est 0,011 ml/g,

Le volume poreux, mesuré par porosimétrie au mercure, est compris dans les pores de diamètre supérieur à 500 Å est de 0,001 ml/g,

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

Le rapport B/L du support est de 0,12.

La densité de remplissage tassée du catalyseur est de 1.05 g/$cm^3$.

La teneur en sodium atomique est de 310 +/- 20 ppm. La teneur en soufre atomique est de 1600 ppm.

Les spectres RMN MAS du solide de $^{27}Al$ des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 67%.

Le catalyseur contient deux zones silico-aluminiques, les dites zones ayant des rapports Si/Al inférieurs ou supérieurs au rapport Si/Al global déterminé par fluorescence X. L'une des zones a un rapport Si/Al déterminé par MET de 0,7 et l'autre zone a un rapport Si/Al déterminé par MET de 0,98.

Exemple 2 : Préparation d'une silice-alumine conforme à l'invention (SA2)

Le support SA2 est préparé à partir du support SA1 sous formes d'extrudés séchés et calcinés par imprégnation de TEOS (tétraethoxysilane) selon la méthode décrite par B.Beguin, E.Garbowski, M.Primet dans "Journal of Catalysis", page 595, volume 127, 1991. Puis, les extrudés imprégnés sont séchés à 120°C pendant 15 h, calcinés à 530°C sous un courant d'air sec pendant 2 h puis calcinés à 700°C en présence de vapeur d'eau.

L'échantillon ainsi obtenu est nommé SA2.

Les extrudés ainsi obtenus sont séchés à 150°C, puis calcinés à 550°C,

Les caractéristiques du support SA2 sont les suivantes :

La composition du support est 47,7 % $Al_2O_3$- 52,3 % $SiO_2$.

La surface BET est de 282 m²/g.

Le volume poreux total, mesuré par adsorption d'azote, est de 0,41 ml/g

Le diamètre poreux moyen, mesuré par porosimétrie au mercure, est de 59 Å.

Le rapport entre le volume V2, mesuré par porosimétrie au mercure, compris entre le $D_{moyen}$ - 30 Å et le $D_{moyen}$ + 30 Å sur le volume mercure total est de 0,90.

Le volume V3, mesuré par porosimétrie au mercure, compris dans les pores de diamètres supérieurs à $D_{moyen}$ + 30 Å est de 0,035 ml/g.

Le volume V6, mesuré par porosimétrie au mercure, compris dans les pores de diamètres supérieurs à $D_{moyen}$ + 15 Å est de 0,04 ml/g,

Le rapport entre la surface adsorption et la surface BET est de 0,75.

Le volume poreux, mesuré par porosimétrie au mercure, compris dans les pores de diamètre supérieur à 140 Å est de 0,011 ml/g,

Le volume poreux, mesuré par porosimétrie au mercure, compris dans les pores de diamètre supérieur à 160 Å est de 0,01 ml/g,

Le volume poreux, mesuré par porosimétrie au mercure, compris dans les pores de diamètre supérieur à 200 Å est de 0,009 ml/g,

Le volume poreux, mesuré par porosimétrie au mercure, est compris dans les pores de diamètre supérieur à 500 Å est de 0,001 ml/g,

Le rapport B/L du support est de 0,13.

La densité de remplissage tassée du catalyseur est de 1.07 g/cm³.

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

La teneur en sodium atomique est de 300 +/- 20 ppm. La teneur en soufre atomique est de 1500 ppm. Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm et qui s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 67%.

Le catalyseur contient deux zones silico-aluminiques, les dites zones ayant des rapports Si/Al inférieurs ou supérieurs au rapport Si/Al global déterminé par fluorescence X. L'une des zones a un rapport Si/Al déterminé par MET de 0,72 et l'autre zone a un rapport Si/Al déterminé par MET de 0,99.

Exemple 3 : Préparation et mise en forme d'une silice-alumine conforme à l'invention (SA3)

On prépare un hydrate d'alumine selon les enseignements du brevet US 3 124 418. Après filtration, le précipité fraîchement préparé est mélangé avec une solution d'acide silicique préparé par échange sur résine décationisante. Les proportions des deux solutions sont ajustées de manière à atteindre une composition de 70 % $Al_2O_3$- 30 % $SiO_2$ sur le support final. Ce mélange est rapidement homogénéisé dans un broyeur colloïdal commercial en présence d'acide nitrique de façon que la teneur en acide nitrique de la suspension en sortie de broyeur soit de 8% rapportée au solide mixte silice-alumine. Puis, la suspension est séchée classiquement dans un atomiseur de manière conventionnelle de 300°C à 60°C. La poudre ainsi préparée est mise en forme dans un bras en Z en présence de 8% d'acide nitrique par rapport au produit anhydre. L'extrusion est réalisée par passage de la pâte au travers d'une filière munie d'orifices de diamètre 1,4 mm. Les extrudés ainsi obtenus sont séchés à 150°C, puis calcinés à 550°C, puis calcinés à 750°C en présence de vapeur d'eau.

Les caractéristiques du support SA3 sont les suivantes :

La composition du support en silice-alumine est de 69,5% $Al_2O_3$ et de 30,5% $SiO_2$.
La surface BET est de 250 m$^2$/g.

Le volume poreux total, mesuré par adsorption d'azote, est de 0,45 ml/g.
Le diamètre poreux moyen, mesuré par porosimétrie au mercure, est de 70 Å.
Le rapport entre le volume V2, mesuré par porosimétrie au mercure, compris entre le $D_{moyen}$ - 30 Å et le $D_{moyen}$ + 30 Å sur le volume mercure total est de 0,9.
Le volume V3, mesuré par porosimétrie au mercure, compris dans les pores de diamètre supérieur à $D_{moyen}$ + 30 Å est de 0,021 ml/g.
Le volume V6, mesuré par porosimétrie au mercure, compris dans les pores de diamètre supérieur à $D_{moyen}$ + 15 Å est de 0,035 ml/g,
Le rapport entre la surface adsorption et la surface BET est de 0,82.
Le volume poreux, mesuré par porosimétrie au mercure, compris dans les pores de diamètre supérieur à 140 Å est de 0,015 ml/g,
Le volume poreux, mesuré par porosimétrie au mercure, compris dans les pores de diamètre supérieur à 160 Å est de 0,01 ml/g,
Le volume poreux, mesuré par porosimétrie au mercure, compris dans les pores de diamètre supérieur à 200 Å est 0,007ml/g,
Le volume poreux, mesuré par porosimétrie au mercure, est compris dans les pores de diamètre supérieur à 500 Å est de 0,001 ml/g,
Le diagramme de diffraction X contient les raies principales caractéristiques de l'alumine gamma et notamment il contient les pics à un d compris entre 1,39 à 1,40 Å et à un d compris entre 1,97 Å à 2,00 Å.
Le rapport B/L du support est de 0,11.
La densité de remplissage tassée du catalyseur est de 1.06 g/cm$^3$.
La teneur en sodium atomique est de 250 +/- 20 ppm. La teneur en soufre atomique est de 2000 ppm.
Les spectres RMN MAS du solide de $^{27}Al$ des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 69%.
Le catalyseur contient une seule zone silico-aluminique avec un rapport Si/Al déterminé par microsonde en MET de 0,37.

Exemple 4 : Préparation d'une silice-alumine conforme à l'invention (SA4)

Le support SA4 est préparé à partir du support SA3, sous forme d'extrudés séchés et calcinés, par imprégnation de TEOS (tétraethoxysilane) selon la méthode décrite par B.Beguin, E.Garbowski, M.Primet dans "Journal of Catalysis", page 595, volume 127, 1991. Puis, les extrudés imprégnés sont séchés à 120°C pendant 15 h et calcinés à 530°C sous un courant d'air sec pendant 2 h, puis à 700°C. L'échantillon ainsi obtenu est nommé SA4.
Les caractéristiques du support SA4 sont les suivantes :
La composition du support en silice-alumine est 67,5% $Al_2O_3$ et de 33,5% $SiO_2$.
La surface BET est de 280 m$^2$/g.
Le volume poreux total, mesuré par adsorption d'azote, est de 0,43 ml/g
Le diamètre poreux moyen, mesuré par porosimétrie au mercure, est de 73 Å.
Le rapport entre le volume V2, mesuré par porosimétrie au mercure, compris entre le $D_{moyen}$ - 30 Å et le $D_{moyen}$ + 30 Å sur le volume mercure total est de 0,85.
Le volume V3, mesuré par porosimétrie au mercure, compris dans les pores de diamètre supérieur à $D_{moyen}$ + 30 Å est de 0,019 ml/g.
Le volume V6, mesuré par porosimétrie au mercure, compris dans les pores de diamètre supérieur à $D_{moyen}$ + 15 Å est de 0,032 ml/g,
Le rapport entre la surface adsorption et la surface BET est de 0,8.
Le volume poreux, mesuré par porosimétrie au mercure, compris dans les pores de diamètre supérieur à 140 Å est de 0,013 ml/g,
Le volume poreux, mesuré par porosimétrie au mercure, compris dans les pores de diamètre supérieur à 160 Å est de 0,009 ml/g,
Le volume poreux, mesuré par porosimétrie au mercure, compris dans les pores de diamètre supérieur à 200 Å est de 0,006ml/g,

Le volume poreux, mesuré par porosimétrie au mercure, compris dans les pores de diamètre supérieur à 500 Å est de 0,001 ml/g,

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

La teneur en sodium atomique est de 240 +/- 20 ppm. La teneur en soufre atomique est de 1950 ppm. Le rapport B/L du support est de 0,12.

La densité de remplissage tassée du catalyseur est de 1.08 g/cm$^3$.

Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 69%.

Le catalyseur contient une seule zone silico-aluminique avec un rapport Si/Al déterminé par microsonde en MET de 0,37.

Exemple 5 : Préparation et mise en forme d'une silice-alumine conforme à l'invention (SA5)

La poudre d'hydroxyde d'aluminium a été préparée selon le procédé décrit dans le brevet WO 00/01617. La taille des particules moyenne des particules d'hydroxyde d'aluminium mesurée par granulométrie laser est de 40 microns. Cette poudre est mélangée à un sol de silice préparé par échange sur résine décationisante, puis filtré sur résine de porosité 2. Les concentrations en sol de silice et en poudre d'hydroxyde d'aluminium sont ajustées de manière à obtenir une composition finale de 60% $Al_2O_3$ et de 40% $SiO_2$. La mise en forme est réalisée en présence de 15 % d'acide nitrique par rapport au produit anhydre. Le malaxage se fait sur un malaxeur bras en Z. L'extrusion est réalisée par passage de la pâte au travers d'une filière munie d'orifices de diamètre 1,4 mm. Les extrudés ainsi obtenus sont séchés à 150°C, puis calcinés à 550°C, puis calcinés à 750°C en présence de vapeur d'eau.

Les caractéristiques du support sont les suivantes :

La composition du support en silice-alumine est de 59,7% $Al_2O_3$ et de 40,3% $SiO_2$.

La surface BET est de 248 m$^2$/g.

Le volume poreux total, mesuré par adsorption d'azote, est de 0,46 ml/g

Le diamètre poreux moyen, mesuré par porosimétrie au mercure, est de 69 Å.

Le rapport entre le volume V2, mesuré par porosimétrie au mercure, compris entre le $D_{moyen}$ - 30 Å et le $D_{moyen}$ + 30 Å sur le volume mercure total est de 0,9.

Le volume V3, mesuré par porosimétrie au mercure, compris dans les pores de diamètre supérieur à $D_{moyen}$ + 30 Å est de 0,022 ml/g.

Le volume V6, mesuré par porosimétrie au mercure, compris dans les pores de diamètre supérieur à $D_{moyen}$ + 15 Å est de 0,031 ml/g,

Le rapport entre la surface adsorption et la surface BET est de 0,83.

Le volume poreux, mesuré par porosimétrie au mercure, compris dans les pores de diamètre supérieur à 140 Å est de 0,012 ml/g,

Le volume poreux, mesuré par porosimétrie au mercure, compris dans les pores de diamètre supérieur à 160 Å est de 0,0105 ml/g,

Le volume poreux, mesuré par porosimétrie au mercure, compris dans les pores de diamètre supérieur à 200 Å est de 0,0065 ml/g,

Le volume poreux, mesuré par porosimétrie au mercure, est compris dans les pores de diamètre supérieur à 500 est de 0,001 ml/g,

Le rapport B/L du support est de 0,12.

La densité de remplissage tassée du catalyseur est de 1.08 g/cm$^3$.

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

La teneur en sodium atomique est de 200 +/- 20 ppm. La teneur en soufre atomique est de 800 ppm.

Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm et qui s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 70%.

Le catalyseur contient deux zones silico-aluminiques, les dites zones ayant des rapports Si/Al inférieurs ou supérieurs au rapport Si/Al global déterminé par fluorescence X. L'une des zones a un rapport Si/Al déterminé par MET de 0,22 et l'autre zone a un rapport Si/Al déterminé par MET de 0,85.

Exemple 6 : Préparation d'une silice-alumine conforme à l'invention (SA6)

Le support SA6 est préparé à partir du support SA5, sous forme d'extrudés séchés et calcinés. Après refroidissement, l'échantillon SA5 est mis au contact d'une solution éthanolique d'orthosilicate de tétraéthyle $Si(OC_2H_5)_4$. Cette mise en contact est réalisée à température ambiante pendant 2 h sous agitation. Le solvant est ensuite évaporé sous pression réduite. Puis, les extrudés imprégnés sont séchés à 120°C pendant 15 h et calcinés à 530°C sous un courant d'air sec pendant 2 h, puis calcinés à 700°C en présence de vapeur d'eau.

L'échantillon ainsi obtenu est nommé SA6.

Les extrudés ainsi obtenus sont séchés à 150°C, calcinés à 550°C,

Les caractéristiques du support sont les suivantes :

La composition du support en silice et alumine est de 56,38% $Al_2O_3$ et de 43,62% $SiO_2$

La surface BET est de 280 $m^2$/g.

Le volume poreux total, mesuré par adsorption d'azote, est de 0,405 ml/g

Le diamètre poreux moyen, mesuré par porosimétrie au mercure, est de 60 Å.

Le rapport entre le volume V2, mesuré par porosimétrie au mercure, compris entre le $D_{moyen}$ - 30 Å et le $D_{moyen}$ + 30 Å sur le volume mercure total est de 0,9.

Le volume V3, mesuré par porosimétrie au mercure, compris dans les pores de diamètres supérieurs à $D_{moyen}$ + 30 Å est de 0,02 ml/g.

Le volume V6, mesuré par porosimétrie au mercure, compris dans les pores de diamètres supérieurs à $D_{moyen}$ + 15 Å est de 0,027 ml/g,

Le rapport entre la surface adsorption et la surface BET est de 0,8.

Le volume poreux, mesuré par porosimétrie au mercure, compris dans les pores de diamètre supérieur à 140 Å est de 0,011 ml/g,

Le volume poreux, mesuré par porosimétrie au mercure, compris dans les pores de diamètre supérieur à 160 Å est de 0,01 ml/g,

Le volume poreux, mesuré par porosimétrie au mercure, compris dans les pores de diamètre supérieur à 200 Å est de 0,006 ml/g,

Le volume poreux, mesuré par porosimétrie au mercure, est compris dans les pores de diamètre supérieur à 500 Å est de 0,001 ml/g,

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

Le rapport B/L du support est de 0,13.

La densité de remplissage tassée du catalyseur est de 1.09 $g/cm^3$.

La teneur en sodium atomique est de 200 +/- 20 ppm. La teneur en soufre atomique est de 800 ppm.

Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 70%.

Le catalyseur contient deux zones silico-aluminiques, les dites zones ayant des rapports Si/Al inférieurs ou supérieurs au rapport Si/Al global déterminé par fluorescence X. L'une des zones a un rapport Si/Al déterminé par MET de 0,23 et l'autre zone a un rapport Si/Al déterminé par MET de 0,86.

Exemple 7 : Préparation et mise en forme d'une silice-alumine conforme à l'invention (SA7)

Le support SA7 est obtenu de la manière suivante.

Les gels de silice-alumine sont préparés en mélangeant du silicate de soude et de l'eau, en envoyant ce mélange sur une résine échangeuse d'ion. On ajoute une solution d'hexahydrate de chlorure d'aluminium dans l'eau au sol de silice décationisé. Afin d'obtenir un gel, on ajoute de l'ammoniaque, on filtre ensuite le précipité et on effectue un lavage avec une solution d'eau et d'ammoniaque concentrée jusqu'à que la conductivité de l'eau de lavage soit constante. Le gel issu de cette étape est mélangé avec de la poudre de boehmite Pural de façon à ce que la composition finale du support mixte en produit anhydre soit, à ce stade de la synthèse, égale à 60% $Al_2O_3$-40% $SiO_2$. Cette suspension est passée dans un broyeur colloïdal en présence d'acide nitrique. La teneur en acide nitrique rajouté est ajustée de manière que le pourcentage en sortie de broyeur d'acide nitrique soit de 8% rapporté à la masse d'oxyde mixte solide. Ce mélange est ensuite filtré afin de diminuer la quantité d'eau du gâteau mixte. Puis, le gâteau est malaxé en présence de 10% d'acide nitrique puis extrudé. Le malaxage se fait sur un malaxeur bras en Z. L'extrusion est réalisée par passage de la pâte au travers d'une filière munie d'orifices de diamètre 1,4 mm. Les extrudés ainsi obtenus sont séchés à 150°C, puis calcinés à 550°C, puis calcinés à 700°C en présence de vapeur d'eau.

Les caractéristiques du support SA7 sont les suivantes :

La composition du support en silice-alumine est 60,7% $Al_2O_3$ et de 39,3% $SiO_2$.

La surface BET est de 258 $m^2/g$.

Le volume poreux total, mesuré par adsorption d'azote, est de 0,47 ml/g

Le diamètre poreux moyen, mesuré par porosimétrie au mercure, est de 69 Å.

Le rapport entre le volume V2, mesuré par porosimétrie au mercure, compris entre le $D_{moyen}$ - 30 Å et le $D_{moyen}$ + 30 Å sur le volume mercure total est de 0,89.

Le volume V3, mesuré par porosimétrie au mercure, compris dans les pores de diamètre supérieur à $D_{moyen}$ + 30 Å est de 0,032 ml/g.

Le volume V6, mesuré par porosimétrie au mercure, compris dans les pores de diamètre supérieur à $D_{moyen}$ + 15 Å est de 0,041 ml/g,

Le rapport entre la surface adsorption et la surface BET est de 0,83.

Le volume poreux, mesuré par porosimétrie au mercure, compris dans les pores de diamètre supérieur à 140 Å est de 0,012 ml/g,

Le volume poreux, mesuré par porosimétrie au mercure, compris dans les pores de diamètre supérieur à 160 Å est de 0,0082 ml/g,

Le volume poreux, mesuré par porosimétrie au mercure, compris dans les pores de diamètre supérieur à 200 Å est de 0,0063 ml/g,

Le volume poreux, mesuré par porosimétrie au mercure, est compris dans les pores de diamètre supérieur à 500 Å est de 0,001 ml/g,

Le rapport B/L du support est de 0,11

La densité de remplissage tassée du catalyseur est de 1.06 $g/cm^3$.

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

La teneur en sodium atomique est de 200 +/- 20 ppm. La teneur en soufre atomique est de 800 ppm.

Les spectres RMN MAS du solide de $^{27}Al$ des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'$Al_{IV}$ (tétraédrique). La proportion des $Al_{VI}$ octaédriques est de 70%.

Le catalyseur contient une seule zone silico-aluminique avec un rapport Si/Al déterminé par microsonde en MET de 0,63.

Exemple 8 : Préparation d'une silice-alumine conforme à l'invention (SA8)

Le support SA8 est préparé à partir du support SA7 sous formes d'extrudés séchés et calcinés. Après refroidissement, l'échantillon SA7 est mis au contact d'une solution éthanolique d'orthosilicate de tétraéthyle $Si(OC_2H_5)_4$. Cette mise en contact est réalisée à température ambiante pendant 2 h sous agitation. Le solvant est ensuite évaporé sous pression réduite. Puis, les extrudés imprégnés sont séchés à 120°C pendant 15 h et calcinés à 530°C sous un courant d'air sec pendant 2 h. L'échantillon ainsi obtenu est nommé SA8.

Les caractéristiques du support SA8 sont les suivantes :

La composition du support en silice-alumine est 57,3% $Al_2O_3$ et de 42,7% $SiO_2$.

La surface BET est de 278 $m^2/g$.

Le volume poreux total, mesuré par adsorption d'azote, est de 0,455 ml/g

Le diamètre poreux moyen, mesuré par porosimétrie au mercure, est de 64 Å.

Le rapport entre le volume V2, mesuré par porosimétrie au mercure, compris entre le $D_{moyen}$ - 30 Å et le $D_{moyen}$ + 30 Å sur le volume mercure total est de 0,87.

Le volume V3, mesuré par porosimétrie au mercure, compris dans les pores de diamètre supérieur à $D_{moyen}$ + 30 Å est de 0,03 ml/g.

Le volume V6, mesuré par porosimétrie au mercure, compris dans les pores de diamètre supérieur à $D_{moyen}$ + 15 Å est de 0,037 ml/g,

Le rapport entre la surface adsorption et la surface BET est de 0,80.

un volume poreux, mesuré par porosimétrie au mercure, compris dans les pores de diamètre supérieur à 140 Å est de 0,011 ml/g,

Le volume poreux, mesuré par porosimétrie au mercure, compris dans les pores de diamètre supérieur à 160 Å est de 0,007 ml/g,

Le volume poreux, mesuré par porosimétrie au mercure, compris dans les pores de diamètre supérieur à 200 Å est 0,005 ml/g,

Le volume poreux, mesuré par porosimétrie au mercure, est compris dans les pores de diamètre supérieur à 500 Å est de 0,001 ml/g,

Le rapport B/L du support est de 0,12.

La densité de remplissage tassée du catalyseur est de 1,07 g/cm$^3$.

Le diagramme de diffraction X contient les raies principales caractéristiques de l'alumine gamma et notamment il contient les pics à un d compris entre 1,39 à 1,40 Å et à un d compris entre 1,97 Å à 2,00 Å.

La teneur en sodium atomique est de 200 +/- 20 ppm. La teneur en soufre atomique est de 800 ppm. Les spectres RMN MAS du solide de $^{27}$Al des catalyseurs montrent deux massifs de pics distincts. Un premier type d'aluminium dont le maximum résonne vers 10 ppm s'étend entre -100 et 20 ppm. La position du maximum suggère que ces espèces sont essentiellement de type Al$_{VI}$ (octaédrique). Un deuxième type d'aluminium minoritaire dont le maximum résonne vers 60 ppm s'étend entre 20 et 100 ppm. Ce massif peut être décomposé en au moins deux espèces. L'espèce prédominante de ce massif correspondrait aux atomes d'Al$_{IV}$ (tétraédrique). La proportion des Al$_{VI}$ octaédriques est de 70%.

Le catalyseur contient une seule zone silico-aluminique avec un rapport Si/Al déterminé par microsonde en MET de 0,65.

Exemple 9 : Préparation des catalyseurs d'hydrocraquage selon l'invention (C1 à C9)

Les catalyseurs C1, C2, C3, C4, C5, C6, C7 et C8 sont obtenus par imprégnation à sec d'une solution aqueuse renfermant des sels de tungstène et de nickel, respectivement, des supports SA1, SA2, SA3, SA4, SA5, SA6, SA7 et SA8, sous forme d'extrudés et dont les préparations ont été respectivement décrites dans les exemples 1, 2, 3, 4, 5, 6, 7 et 8. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec.

Les teneurs pondérales finales en WO$_3$ et NiO des catalyseurs sont reportées dans le tableau 1 ci-dessous.

Tableau 1 : Teneurs pondérales en WO$_3$ et NiO des catalyseurs C1 à C8

|  | C1 | C2 | C3 | C4 | C5 | C6 | C7 | C8 |
|---|---|---|---|---|---|---|---|---|
| NiO (% poids) | 3,6 | 3,3 | 3,5 | 3,4 | 3,5 | 3,5 | 3,4 | 3,2 |
| WO$_3$ (% poids) | 24,7 | 24,8 | 24,3 | 24,6 | 24,5 | 24,9 | 24,3 | 24,4 |

Le catalyseur C9 est obtenu par imprégnation à sec du support SA5 (sous forme d'extrudés), préparé dans l'exemple 5 par une imprégnation à sec d'une solution d'acide hexachloroplatinique H$_2$PtCl$_6$. Les extrudés imprégnés sont ensuite calcinés à 550°C sous air sec. La teneur en platine est de 0,48% poids.

Exemple 10 : Evaluation des catalyseurs C1 à C8 en hydrocraquage d'un distillat sous vide en une étape à haute pression

Les catalyseurs C1 à C8 dont la préparation est décrite dans l'exemple 9 sont utilisés pour réaliser l'hydrocraquage d'un distillat sous vide dont les principales caractéristiques sont données ci-après :

| Type de charge | Distillat sous vide |
|---|---|
| Densité à 15°C | 0,9219 |
| Soufre % poids | 2,52 |
| Azote ppm poids | 880 |
| **Distillation simulée** | |
| DS : 05%p°C | 367 |
| DS : 10%p°C | 380 |
| DS : 50%p°C | 443 |
| DS : 90%p °C | 520 |
| DS : Point final °C | 690 |

Les catalyseurs C1 à C8 ont été mis en oeuvre selon le procédé de l'invention en utilisant une unité pilote comportant 1 réacteur à lit fixe traversé, les fluides circulent de bas en haut (up-flow).

Préalablement au test d'hydrocraquage, les catalyseurs sont sulfurés à 120 bars, à 350°C au moyen d'un gasoil de distillation directe additionné de 2% poids de DMDS.

Après sulfuration, les tests catalytiques ont été effectués dans les conditions suivantes :

Pression totale    14 MPa    T=400°C

La vitesse spatiale (VVH) est égale à 0,7 h-1.

Les performances catalytiques sont exprimées par la conversion nette en produits ayant un point d'ébullition inférieurs à 370°C, par la sélectivité nette en distillat moyen coupe 150-370°C et le rapport rendement Gasoil/rendement kérosène dans la fraction distillat moyen. Elles sont exprimées à partir des résultats de distillation simulée.

La conversion nette CN est prise égale à :

$$\text{CN } 370°C = [\,(\% \text{ de } 370°C^-_{\text{effluents}}) - (\% \text{ de } 370°C^-_{\text{charge}})\,]\,/\,[\,100 - (\% \text{ de } 370°C^-_{\text{charge}})]$$

avec

% de $370°C^-_{\text{effluents}}$ = teneur massique en composés ayant des points d'ébullition inférieurs à 370°C dans les effluents, et

% de $370°C^-_{\text{charge}}$ = teneur massique en composés ayant des points d'ébullition inférieurs à 370°C dans la charge.

La sélectivité brute en distillat moyen SB est prise égale à :

SB définition = [(fraction en 150 - 370 $_{\text{effluents}}$)] / [( % de $370°C^-_{\text{effluents}}$)]

Le rendement gasoil/rendement kérosène (rapport Go./Ker.) dans la fraction distillat moyen est prise égale à :

Rapport Go./Ker. = rendement de la fraction (250°C-370°C) de l'effluent / rendement de la fraction (150°C - 250°C) dans l'effluent.

Les performances catalytiques obtenues sont données dans le tableau 2 ci-après.

Tableau 2 : Résultats catalytiques en hydrocraquage une étape et haute pression

| Catalyseur | VVh (h-1) | CN 370°C- % poids | SB % poids Distillat moyen (DM) | Rapport Go./Ker. %poids / %poids |
|---|---|---|---|---|
| C1 | 0,7 | 70,6 | 73,9 | 1,25 |
| C2 | 0,7 | 71,2 | 73,7 | 1,28 |
| C3 | 0,7 | 70,4 | 73,9 | 1,26 |
| C4 | 0,7 | 71,8 | 73,3 | 1,23 |
| C5 | 0,7 | 71,3 | 73,5 | 1,22 |
| C6 | 0,7 | 71,5 | 73,4 | 1,22 |
| C7 | 0,7 | 71,1 | 73,0 | 1,20 |
| C8 | 0,7 | 72,5 | 73,2 | 1,23 |

Exemple 11 : Evaluation du catalyseur C9 dans des conditions simulant le fonctionnement du second réacteur d'un procédé d'hydrocraquage dit en deux étapes

La charge de la deuxième étape est produite par hydrotraitement d'un distillat sous vide sur un catalyseur d'hydroraffinage commercialisé par Axens en présence d'hydrogène, à une température de 395°C et à la vitesse spatiale horaire de 0,55h-1. La conversion en produits 380°C est d'environ 50% poids. Après une étape de séparation, la fraction 380°C+ est recueillie et va servir de charge pour la deuxième étape. Les caractéristiques physico-chimiques de cette charge sont fournies tableau 3 :

Tableau 3 : caractéristiques de la charge de deuxième étape

| Densité (20/4) | 0,853 |
| --- | --- |
| Soufre (ppm poids) | 2,5 |
| Azote (ppm poids) | 1,4 |
| Distillation simulée | |
| Point initial | 322°C |
| Point 5% | 364°C |
| Point 10% | 383°C |
| Point 50% | 448°C |
| Point 90% | 525°C |
| Point final | 589°C |

Cette charge est injectée dans l'unité de test d'hydrocraquage 2ème étape qui comprend un réacteur à lit fixe, à circulation ascendante de la charge (« up-flow »), dans lequel est introduit le catalyseur C9 préparé dans l'exemple 9. Avant injection de la charge le catalyseur est réduit sous hydrogène pur à 450°C pendant 2 heures. Les conditions opératoires de l'unité de test sont les suivantes :

| Pression totale | 14 Mpa |
| --- | --- |
| Catalyseur | 50 ml |
| Température | 370°C |
| Vitesse spatiale (vvh) h-1 | 1,1 |

Les performances catalytiques obtenues dans ces conditions sont décrites tableau 4 de cet exemple.

Tableau 4 : Résultats catalytiques

| Catalyseur | VVh (h$^{-1}$) | CN 370°C$^-$ % poids | SB % poids Distillat moyen (DM) | Rapport Go./Ker. %poids / %poids |
| --- | --- | --- | --- | --- |
| C9 | 1,1 | 78 | 72,0 | 1,1 |

Les exemples 10 et 11 précédents montrent donc tout l'intérêt d'utiliser un catalyseur selon l'invention pour réaliser l'hydrocraquage de charge hydrocarbonées. En effet, ils permettent d'obtenir des conversions élevées de la charge et des sélectivités en distillats moyens intéressantes.

Exemple 12 : Evaluation des catalyseurs C1 et C5 en hydrocraquage d'un distillat sous vide en une étape à pression modérée (hydrocraquage doux)

Les catalyseurs C1 et C5 dont la préparation est décrite dans l'exemple 9 sont utilisés pour réaliser l'hydrocraquage du distillat sous vide, décrit dans l'exemple 10.

Les catalyseurs C1 et C5 ont été mis en oeuvre selon le procédé de l'invention en utilisant une unité pilote comportant 1 réacteur à lit fixe traversé, les fluides circulent de bas en haut (up-flow).

Préalablement au test d'hydrocraquage, les catalyseurs sont sulfurés à 120 bars, à 350°C au moyen d'un gasoil de distillation directe additionné de 2% poids de DMDS.

Après sulfuration, les tests catalytiques ont été effectués dans les conditions suivantes :

Pression totale    5,5 MPa    T=405°C
VVH globale    0,8 h$^{-1}$

La vitesse spatiale (VVH) est égale à 0,8 h-1.

Les performances catalytiques sont exprimées par la conversion nette en produits ayant un point d'ébullition inférieur à 370°C, par la sélectivité nette en distillat moyen coupe 150-370°C et le rapport rendement Gasoil/rendement kérosène dans la fraction distillat moyen. Elles sont exprimées à partir des résultats de distillation simulée et les définitions sont identiques à celles données dans l'exemple 10.

Les performances catalytiques obtenues sont données dans le tableau 5 ci-après.

Tableau 5 : Résultats catalytiques en hydrocraquage doux à pression modérée

| Catalyseur | VVh ($h^{-1}$) | CN 370°C⁻ % poids | SB % poids Distillat moyen (DM) |
|---|---|---|---|
| C1 | 0,8 | 48,4 | 81,2 |
| C5 | 0,8 | 48,9 | 80,9 |

## Revendications

**1.** Procédé de préparation d'un catalyseur comprenant :

- au moins un élément hydro-déshydrogénant choisi dans le groupe formé par les éléments du groupe VIB et du groupe VIII de la classification périodique,
- un support non zéolitique à base de silice - alumine contenant une quantité supérieure à 10% poids et inférieure ou égale à 80% poids de silice ($SiO_2$),
- un diamètre moyen poreux, mesuré par porosimétrie au mercure, compris entre 20 et 140 Å,
- un volume poreux total, mesuré par porosimétrie au mercure, compris entre 0,1 ml/g et 0,6 ml/g,
- un volume poreux total, mesuré par porosimétrie azote, compris entre 0,1 ml/g et 0,6 ml/g,
- une surface spécifique BET comprise entre 150 et 500 $m^2$/g,
- un volume poreux, mesuré par porosimétrie au mercure, compris dans les pores de diamètre supérieurs à 140 Å inférieur à 0,1 ml/g ,
- un volume poreux, mesuré par porosimétrie au mercure, compris dans les pores de diamètre supérieurs à 160 Å inférieur à 0,1 ml/g,
- un volume poreux, mesuré par porosimétrie au mercure, compris dans les pores de diamètre supérieurs à 200 Å inférieur à 0,1 ml/g,
- un volume poreux, mesuré par porosimétrie au mercure, compris dans les pores de diamètre supérieurs à 500 Å inférieur à 0,01 ml/g,
- une distribution poreuse telle que le rapport entre le volume V2, mesuré par porosimétrie au mercure, compris entre le $D_{moyen}$ - 30 Å et le $D_{moyen}$ + 30 Å sur le volume mercure total est supérieur à 0,6, - le volume V3, mesuré par porosimétrie au mercure, compris dans les pores de diamètre supérieur à $D_{moyen}$ + 30 Å est inférieur à 0,1 ml/g,- le volume V6, mesuré par porosimétrie au mercure, compris dans les pores de diamètre supérieur à $D_{moyen}$ + 15 Å est inférieur à 0,2 ml/g,
- un diagramme de diffraction X qui contient au moins les raies principales caractéristiques d'au moins une des alumines de transition comprise dans le groupe composé par les alumines alpha, rhô, chi, eta, gamma, kappa, thêta et delta,

**caractérisé en ce que** ledit support silico-aluminique est obtenu à partir d'un mélange d'un composé d'alumine partiellement soluble en milieu acide avec un composé de silice totalement soluble ou avec une combinaison totalement soluble d'alumine et de silice hydratées, la mise en forme dudit support silico-aluminique étant suivie d'un traitement hydrothermal ou thermique.

**2.** Procédé selon la revendication 1 dans lequel la proportion des AlVI octaédriques dans le catalyseur, déterminée par l'analyse des spectres RMN MAS du solide de 27Al, est supérieure à 50%.

**3.** Procédé selon les revendications 1 à 2 dans lequel le catalyseur est à base de nickel et de tungstène.

**4.** Procédé selon les revendications 1 à 2 dans lequel le catalyseur est à base de platine et de palladium.

**5.** Procédé selon l'une des revendications précédentes dans lequel le catalyseur comprend au moins un élément dopant choisi dans le groupe formé par le phosphore, le bore et le silicium et déposé sur ledit catalyseur.

**6.** Procédé selon l'une des revendications précédentes dans lequel le catalyseur comprend au moins un élément du groupe VIIB.

7. Procédé selon l'une des revendications précédentes dans lequel le catalyseur comprend au moins un élément du groupe VB.

8. Procédé selon l'une des revendications précédentes dans lequel le catalyseur présente une densité de remplissage tassée supérieure à 0,85 g/cm3.

9. Procédé selon l'une des revendications précédentes dans lequel le catalyseur comprend un support non zéolitique à base de silice - alumine contenant une quantité supérieure à 10% poids et inférieure ou égale à 80% poids de silice (SiO2)

    - un diamètre moyen poreux, mesuré par porosimétrie au mercure, compris entre 20 et 140 Å,
    - un volume poreux total, mesuré par porosimétrie au mercure, compris entre 0,1 ml/g et 0,6 ml/g,
    - un volume poreux total, mesuré par porosimétrie azote, compris entre 0,1 ml/g et 0,6 ml/g,
    - une surface spécifique BET comprise entre 150 et 500 m2/g,
    - un volume poreux, mesuré par porosimétrie au mercure, compris dans les pores de diamètre supérieurs à 140 Å inférieur à 0,1 ml/g ,
    - un volume poreux, mesuré par porosimétrie au mercure, compris dans les pores de diamètre supérieurs à 160 Å inférieur à 0,1 ml/g,
    - un volume poreux, mesuré par porosimétrie au mercure, compris dans les pores de diamètre supérieurs à 200 Å inférieur à 0,1 ml/g,
    - un volume poreux, mesuré par porosimétrie au mercure, compris dans les pores de diamètre supérieurs à 500 Å inférieur à 0,01 ml/g,
    - une distribution poreuse telle que le rapport entre le volume V2, mesuré par porosimétrie au mercure, compris entre le Dmoyen - 30 Å et le Dmoyen + 30 Å sur le volume mercure total est supérieur à 0,6, - le volume V3, mesuré par porosimétrie au mercure, compris dans les pores de diamètre supérieur à Dmoyen + 30 Å est inférieur à 0,1 ml/g,- le volume V6, mesuré par porosimétrie au mercure, compris dans les pores de diamètre supérieur à Dmoyen + 15 Å est inférieur à 0,2 ml/g,
    - un diagramme de diffraction X qui contient au moins les raies principales caractéristiques d'au moins une des alumines de transition comprise dans le groupe composé par les alumines rho, chi, eta, gamma, kappa, thêta et delta,

**caractérisé en ce que** ledit support silico-aluminique est obtenu à partir d'un mélange d'un composé d'alumine partiellement soluble en milieu acide avec un composé de silice totalement soluble ou avec une combinaison totalement soluble d'alumine et de silice hydratées, la mise en forme dudit support silico-aluminique étant suivie d'un traitement hydrothermal ou thermique.

10. Procédé selon la revendication 9 dans lequel la teneur en impuretés cationiques du support est inférieure à 0,1 % poids.

11. Procédé selon l'une des revendications 9 et 10 dans lequel la teneur du support en impuretés anioniques est inférieure à 0,5 % poids.

12. Procédé selon l'une des revendications 9 à 11 dans lequel le diagramme de diffraction X du support contient au moins les raies principales caractéristiques d'au moins une des alumines de transition comprise dans le groupe composé par les alumines êta, thêta, delta et gamma.

13. Procédé selon l'une des revendications 9 à 12 dans lequel le diagramme de diffraction X du support contient au moins les raies principales caractéristiques d'au moins une des alumines de transition comprise dans le groupe composé par les alumines êta et gamma.

14. Procédé selon l'une des revendications 9 à 13 dans lequel le diamètre moyen poreux du support est compris entre 40 et 120 Å.

15. Procédé selon l'une des revendications 9 à 14 dans lequel le support comprend au moins deux zones silico-aluminiques ayant des rapports Si/Al inférieurs ou supérieurs au rapport Si/Al global déterminé par fluorescence X.

**EP 1 415 712 B1**

16. Procédé selon l'une des revendications 9 à 15 dans lequel le support comprend une seule zone silico-aluminique ayant un rapport Si/Al égal au rapport Si/Al global déterminé par fluorescence X et inférieur à 2,3.

17. Procécé selon l'une des revendications 9 à 16 dans lequel la densité de remplissage tassée du support, après calcination, est supérieure à 0,65 g/cm3.

18. Procédé selon l'une des revendications 9 à 17 dans lequel l'acidité du support mesurée par suivi IR de la thermo-désorption de la pyridine est telle que le rapport B/L est compris entre 0,05 et 1.

19. Procédé d'hydrocraquage et/ou d'hydroconversion de charges hydrocarbonées utilisant le catalyseur préparé selon le procédé de préparation selon l'une des revendications 1 à 18

20. Procédé d'hydrocraquage et/ou d'hydroconversion selon la revendication 19 réalisé selon le procédé dit en une étape.

21. Procécé d'hydrocraquage et/ou d'hydroconversion selon la revendication 20 comprenant :

- une première zone réactionnelle d'hydroraffinage dans laquelle la charge est mise en contact avec au moins un catalyseur d'hydroraffinage présentant dans le test standard d'activité un taux de conversion du méthylcyclohexane inférieur à 10 % massique,
- une deuxième zone réactionnelle d'hydrocraquage dans laquelle une partie au moins de l'effluent issu de l'étape d'hydroraffinage est mise en contact avec au moins un catalyseur d'hydrocraquage non zéolitique présentant dans le test standard d'activité un taux de conversion du méthylcyclohexane supérieur à 10 % massique, et dans lequel la proportion du volume catalytique de catalyseur d'hydroraffinage représente 20 à 45% du volume catalytique total.

22. Procédé d'hydrocraquage et/ou d'hydroconversion selon la revendication 19 comportant au moins une première zone réactionnelle d'hydroraffinage et au moins une deuxième zone réactionnelle comportant un hydrocraquage d'au moins une partie de l'effluent de la première zone et comportant une séparation incomplète de l'ammoniac de l'effluent sortant de la première zone.

23. Procédé d'hydrocraquage et/ou d'hydroconversion selon la revendication 19 dans le procédé dit en deux étapes.

24. Procédé selon l'une des revendications 19 à 23 opérant, en présence d'hydrogène, à une température supérieure à 200°C, sous une pression supérieure à 1 MPa, la vitesse spatiale étant comprise entre 0,1 et 20h-1 et la quantité d'hydrogène introduite est telle que le rapport volumique litre d'hydrogène / litre d'hydrocarbure soit compris entre 80 et 5000l/l.

25. Procédé d'hydrocraquage et/ou d'hydroconversion selon l'une des revendications 19 à 24 opérant à une pression comprise entre 20 et 60 bar et conduisant à des conversions inférieures à 40%.

26. Procédé selon l'une des revendications 19 à 25 opérant en lit fixe.

27. Procédé selon l'une des revendications 19 à 25 opérant en lit bouillonnant.

28. Procédé selon la revendication 23 dans lequel le catalyseur est à base d'au moins un des éléments nobles du groupe VIII.

29. Procédé selon la revendication 28 dans lequel le catalyseur est à base de platine et/ou de palladium.

30. Procédé d'hydrotraitement de charges hydrocarbonées utilisant le catalyseur préparé selon le procédé de préparation selon l'une des revendications 1 à 18

31. Procédé selon la revendication 30 placé en amont d'un procédé d'hydrocraquage.

32. Procédé selon la revendication 31 où le catalyseur d'hydrocraquage est à base de zéolite.

33. Procédé selon la revendication 31 où le catalyseur d'hydrocraquage est à base de silice-alumine.

34. Procédé selon l'une des revendications 19 à 33 dans lequel le catalyseur d'hydrocraquage est à base de nickel et de tungstène.

35. Procédé selon l'une des revendications 19 à 34 dans lequel les charges hydrocarbonées sont choisies dans le groupe formé par les LCO (light cycle oil), les distillats atmosphériques, les distillats sous vide, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, seules ou en mélange.

**Claims**

1. Process of preparation of a catalyst comprising:

   - At least one hydro-dehydrogenating element that is selected from the group that is formed by elements of group VIB and of group VIII of the periodic table,
   - a non-zeolitic silica-alumina-based substrate that contains an amount that is more than 10% by weight and less than or equal to 80% by weight of silica ($SiO_2$),
   - a total pore volume, measured by mercury porosimetry, encompassed between 20 and 140 Å,
   - a total pore volume, measured by mercury porosimetry, encompassed between 0.1 ml/g and 0.6 ml/g,
   - a total pore volume, measured by nitrogen porosimetry, encompassed between 0.1 ml/g and 0.6 ml/g,
   - a BET specific surface area encompassed between 150 and 500 $m^2$/g,
   - a pore volume, measured by mercury porosimetry, encompassed in the pores with diameters of more than 140 Å, of less than 0.1 ml/g,
   - a pore volume, measured by mercury porosimetry, encompassed in the pores with diameters of more than 160 Å, of less than 0.1 ml/g,
   - a pore volume, measured by mercury porosimetry, encompassed in the pores with diameters of more than 200 Å, of less than 0.1 ml/g,
   - a pore volume, measured by mercury porosimetry, encompassed in the pores with diameters of more than 500 Å, of less than 0.01 ml/g,
   - a pore distribution such that the ratio between volume V2, measured by mercury porosimetry, encompassed between $D_{mean}$ - 30 Å and $D_{mean}$ + 30 Å to the total mercury volume is more than 0.6 - volume V3, measured by mercury porosimetry, encompassed in the pores with diameters of more than $D_{mean}$ + 30 Å is less than 0.1 ml/g - volume V6, measured by mercury porosimetry, encompassed in the pores with diameters of more than $D_{mean}$ + 15 Å is less than 0.2 ml/g,
   - an X diffraction diagram that contains at least the main lines that are characteristic of at least one of the transition aluminas encompassed in the group that consists of the alpha, rho, chi, eta, gamma, kappa, theta and delta aluminas,

   **Characterized in that** said silico-aluminum substrate is obtained starting from a mixture of an alumina compound that is partially soluble in acid medium shaped with a totally soluble silica compound or with a totally soluble combination of hydrated alumina and silica, followed by a hydrothermal or thermal treatment.

2. Process according to claim 1, in which the proportion of octahedral $Al_{VI}$ determined by the analysis of the NMR MAS spectra of the solid of $^{27}$Al is more than 50%.

3. Process according to claims 1 to 2 that is based on nickel and tungsten.

4. Process according to claims 1 to 2 that is based on platinum and palladium.

5. Process according to one of the preceding claims that comprises at least one dopant that is selected from the group that is formed by phosphorus, boron, and silicon and is deposited on the catalyst.

6. Process according to one of the preceding claims that comprises at least one element of group VIIB.

7. Process according to one of the preceding claims that comprises at least one element of group VB.

8. Process according to one of the preceding claims such that the packing density is more than 0.85 g/cm$^3$.

9. Process according to one of the preceding claims in which the catalyst comprise a non-zeolitic silica-alumina-based substrate that contains an amount that is more than 10% by weight and less than or equal to 80% by weight of silica (SiO$_2$),
**characterized by**:

   - a mean pore diameter, measured by mercury porosimetry, encompassed between 20 and 140 Å,
   - a total pore volume, measured by mercury porosimetry, encompassed between 0.1 ml/g and 0.6 ml/g,
   - a total pore volume, measured by nitrogen porosimetry, encompassed between 0.1 ml/g and 0.6 ml/g,
   - a BET specific surface area encompassed between 150 and 500 m$^2$/g,
   - a pore volume, measured by mercury porosimetry, encompassed in the pores with diameters of more than 140 Å, of less than 0.1 ml/g,
   - a pore volume, measured by mercury porosimetry, encompassed in the pores with diameters of more than 160 Å, of less than 0.1 ml/g,
   - a pore volume, measured by mercury porosimetry, encompassed in the pores with diameters of more than 200 Å, of less than 0.1 ml/g,
   - a pore volume, measured by mercury porosimetry, encompassed in the pores with diameters of more than 500 Å, of less than 0.01 ml/g,
   - a pore distribution such that the ratio between volume V2, measured by mercury porosimetry, encompassed between D$_{mean}$ - 30 Å and D$_{mean}$ + 30 Å to the total mercury volume is more than 0.6 - volume V3, measured by mercury porosimetry, encompassed in the pores with diameters of more than D$_{mean}$ + 30 Å is less than 0.1 ml/g - volume V6, measured by mercury porosimetry, encompassed in the pores with diameters of more than D$_{mean}$ + 15 Å is less than 0.2 ml/g,
   - an X diffraction diagram that contains at least the main lines that are characteristic of at least one of the transition aluminas encompassed in the group that consists of the alpha, rho, chi, eta, gamma, kappa, theta and delta aluminas,

   **Characterized in that** said silico-aluminum substrate is obtained starting from a mixture of an alumina compound that is partially soluble in acid medium shaped with a totally soluble silica compound or with a totally soluble combination of hydrated alumina and silica, followed by a hydrothermal or thermal treatment.

10. Process according to claim 9, in which the cationic impurity content is less than 0.1 % by weight.

11. Process according to one of claims 9 and 10, in which the anionic impurity content is less than 0.5% by weight.

12. Process according to one of claims 9 to 11, such that the X diffraction diagram contains at least the main lines that are characteristic of at least one of the transition aluminas encompassed in the group that consists of eta, theta, delta and gamma aluminas.

13. Process according to one of claims 9 to 12, such that the X diffraction diagram contains at least the main lines that are characteristic of at least one of the transition aluminas contained in the group that consists of eta- and gamma-aluminas.

14. Process according to one of claims 9 to 13, such that the mean pore diameter is encompassed between 40 and 120 Å.

15. Process according to one of claims 9 to 14 such that it comprises at least two silico-aluminum zones that have Si/Al ratios that are less than or greater than the overall Si/Al ratio that is determined by X fluorescence.

16. Process according to one of claims 9 to 15 such that it comprises a single silico-aluminum zone that has an Si/Al ratio that is equal to the overall Si/Al ratio that is determined by X fluorescence and is less than 2.3.

17. Process according to one of claims 9 to 16, such that the packing density, after calcination, is more than 0.65 g/cm$^3$.

18. Process according to one of claims 9 to 17 whose acidity that is measured by IR tracking of the thermodesorption of the pyridine is such that the B/L ratio is encompassed between 0.05 and 1.

19. Process for hydrocracking and/or hydroconversion of hydrocarbon-containing feedstocks that use the catalyst according to one of claims 1 to 8 or the catalyst that contains the substrate according to one of claims 9 to 18.

20. Process for hydrocracking and/or hydroconversion according to claim 19 that is carried out according to the so-called single-stage process.

21. Process for hydrocracking and/or hydroconversion according to claim 20 that comprises:

- A first hydrorefining reaction zone in which the feedstock is brought into contact with at least one hydrorefining catalyst that exhibits in the standard activity test a methylcyclohexane conversion level that is less than 10% by mass,
- A second hydrocracking reaction zone in which at least a portion of the effluent that is obtained from the hydrorefining stage is brought into contact with at least one non-zeolitic hydrocracking catalyst that exhibits in the standard activity test a methylcyclohexane conversion level that is more than 10% by mass,
- and in which the proportion of the catalytic volume of the hydrorefining catalyst represents 20 to 45% of the total catalytic volume.

22. Process for hydrocracking and/or hydroconversion according to claim 19 that comprises at least a first hydrorefining reaction zone and at least a second reaction zone that comprises a hydrocracking of at least a portion of the effluent of the first zone and that comprises an incomplete separation of ammonia from the effluent that exits from the first zone.

23. Process for hydrocracking and/or hydroconversion according to claim 19 in the so-called two-stage process.

24. Process according to one of claims 19 to 23 that operates, in the presence of hydrogen, at a temperature of more than 200°C, under a pressure of more than 1 MPa, whereby the volumetric flow rate is encompassed between 0.1 and 20 h$^{-1}$, and the amount of hydrogen that is introduced is such that the volumetric ratio of liter of hydrogen/liter of hydrocarbon is encompassed between 80 and 5000 1/1.

25. Process for hydrocracking and/or hydroconversion according to one of claims 19 to 24 that operates at a pressure encompassed between 20 and 60 bar and that results in conversions of less than 40%.

26. Process according to one of claims 19 to 25 that operates in a fixed bed.

27. Process according to one of claims 19 to 25 that operates in a boiling bed.

28. Process according to claim 23, in which the catalyst is based on at least one of the noble elements of group VIII.

29. Process according to claim 28, in which the catalyst is based on platinum and/or palladium.

30. Process for hydrotreatment of hydrocarbon-containing feedstocks that use the catalyst prepared according to one of claims 1 to 18.

31. Process according to claim 30 that is placed upstream from a hydrocracking process.

32. Process according to claim 31, where the hydrocracking catalyst is based on zeolite.

33. Process according to claim 31, where the hydrocracking catalyst is based on silica-alumina.

34. Process according to one of claims 19 to 33, in which the hydrocracking catalyst is based on nickel and tungsten.

35. Process according to one of claims 19 to 34, in which the hydrocarbon-containing feedstocks are selected from the group that is formed by LCO (light cycle oil), atmospheric distillates, vacuum distillates, whereby the feedstocks are obtained from units for extracting aromatic compounds from lubricating oil bases or obtained from solvent dewaxing of lubricating oil bases, whereby the distillates are obtained by processes for desulfurization or hydroconversion in a fixed bed or in a boiling bed of RAT (atmospheric residues) and/or RSV (vacuum residues) and/or desasphalted oils, the deasphalted oils, by themselves or in a mixture.

**Patentansprüche**

1. Verfahren zur Herstellung eines Katalysators, umfassend:

   - mindestens ein hydro-dehydrierendes Element, ausgewählt aus der Gruppe, gebildet aus den Elementen der Gruppe VIB und der Gruppe VIII des Periodensystems der Elemente,
   - einen nicht zeolitischen Träger, der auf Siliciumdioxid-Aluminiumoxid basiert, der eine Menge von mehr als 10 Gew.-% und kleiner oder gleich 80 Gew.-% Siliciumdioxid ($SiO_2$) enthält,
   - einen mittleren Porendurchmesser, gemessen mittels Quecksilber-Porosimetrie, im Bereich zwischen 20 und 140 Å,
   - ein gesamtes Porenvolumen, gemessen mittels Quecksilber-Porosimetrie, im Bereich zwischen 0,1 ml/g und 0,6 ml/g,
   - ein gesamtes Porenvolumen, gemessen mittels Stickstoff-Porosimetrie, im Bereich zwischen 0,1 ml/g und 0,6 ml/g,
   - eine spezifische BET-Oberfläche im Bereich zwischen 150 und 500 $m^2$/g,
   - ein Porenvolumen, gemessen mittels Quecksilber-Porosimetrie, im Bereich zwischen Poren mit einem Durchmesser größer als 140 Å und kleiner als 0,1 ml/g,
   - ein Porenvolumen, gemessen mittels Quecksilber-Porosimetrie, im Bereich zwischen Poren mit einem Durchmesser größer als 160 Å und kleiner als 0,1 ml/g,
   - ein Porenvolumen, gemessen mittels Quecksilber-Porosimetrie, im Bereich zwischen Poren mit einem Durchmesser größer als 200 Å und kleiner als 0,1 ml/g,
   - ein Porenvolumen, gemessen mittels Quecksilber-Porosimetrie, im Bereich zwischen Poren mit einem Durchmesser größer als 500 Å und kleiner als 0,01 ml/g.
   - eine Porenverteilung, so dass das Verhältnis zwischen dem Volumen V2, gemessen mittels Quecksilber-Porosimetrie, im Bereich zwischen $D_{mittel}$ - 30 Å und $D_{mittel}$ + 30 Å zum gesamten Quecksilbervolumen größer als 0,6 ist - das Volumen V3, gemessen mittels Quecksilber-Porosimetrie, im Bereich zwischen Poren mit einem Durchmesser $D_{mittel}$ + 30 Å kleiner als 0,1 ml/g ist, - das Volumen V6, gemessen mittels Quecksilber-Porosimetrie, im Bereich zwischen Poren mit einem Durchmesser größer als $D_{mittel}$ + 15 Å kleiner als 0,2 ml/g ist,
   - ein Röntgendiffraktionsdiagramm, das mindestens die charakteristischen Hauptlinien von mindestens einem der Übergangsaluminiumoxide enthält, die die Gruppe bestehend aus den alpha-, rho-, chi-, eta-, gamma-, kappa-, theta- und delta-Aluminiumoxiden umfasst.

   **dadurch gekennzeichnet, dass** der Siliciumdioxid-Aluminiumoxid-Träger aus einer Mischung aus einer teilweise in saurem Medium löslichen Aluminiumoxidverbindung und einer vollständig löslichen Siliciumdioxidverbindung oder aus einer vollständig löslichen Kombination aus Aluminiumoxid und hydrierten Siliciumdioxiden erhalten wird, wobei auf die Formgebung des Siliciumdioxid-AluminiumoxidTrägers eine hydrothermische oder thermische Behandlung folgt.

2. Verfahren nach Anspruch 1, wobei der Anteil des oktaedrischen $Al_{VI}$, der mittels Analyse der MAS NMR-Spektren des $^{27}$Al-Festkörpers bestimmt wird, größer als 50 % ist.

3. Verfahren nach den Ansprüchen 1 bis 2, wobei der Katalysator auf Nickel und Wolfram basiert.

4. Verfahren nach den Ansprüchen 1 bis 2, wobei der Katalysator auf Platin und Palladium basiert.

5. Verfahren nach einem der vorhergehenden Ansprüche, wobei der Katalysators mindestens ein dotierendes Element umfasst, ausgewählt aus der Gruppe gebildet aus Phosphor, Bor und Silicium, und das auf dem Katalysator abgelagert ist.

6. Verfahren nach einem der vorhergehenden Ansprüche, wobei der Katalysator mindestens ein Element der Gruppe VIIB umfasst.

7. Verfahren nach einem der vorhergehenden Ansprüche, wobei der Katalysator mindestens ein Element der Gruppe VB umfasst.

8. Verfahren nach einem der vorherigen Ansprüche, wobei der Katalysator eine Packungsdichte von mehr als 0,85 g/$cm^3$ aufweist.

9. Verfahren nach einem der vorhergehenden Ansprüche, wobei der Katalysator einen nicht zeolitischen Träger umfasst, der auf Siliciumdioxid-Aluminiumoxid basiert, der eine Menge von mehr als 10 Gew.-% und kleiner oder gleich 80 Gew.-% Siliciumdioxid ($SiO_2$) enthält,

   - einen mittleren Porendurchmesser, gemessen mittels Quecksilber-Porosimetrie, im Bereich zwischen 20 und 140 Å,
   - ein gesamtes Porenvolumen, gemessen mittels Quecksilber-Porosimetrie, im Bereich zwischen 0,1 ml/g und 0,6 ml/g,
   - ein gesamtes Porenvolumen, gemessen mittels Stickstoff-Porosimetrie, im Bereich zwischen 0,1 ml/g und 0,6 ml/g,
   - eine spezifische BET-Oberfläche im Bereich zwischen 150 und 500 $m^2$/g,
   - ein Porenvolumen, gemessen mittels Quecksilber-Porosimetrie, im Bereich zwischen Poren mit einem Durchmesser größer als 140 Å und kleiner als 0,1 ml/g,
   - ein Porenvolumen, gemessen mittels Quecksilber-Porosimetrie, im Bereich zwischen Poren mit einem Durchmesser größer als 160 Å und kleiner als 0,1 ml/g,
   - ein Porenvolumen, gemessen mittels Quecksilber-Porosimetrie, im Bereich zwischen Poren mit einem Durchmesser größer als 200 Å und kleiner als 0,1 ml/g,
   - ein Porenvolumen, gemessen mittels Quecksilber-Porosimetrie, im Bereich zwischen Poren mit einem Durchmesser größer als 500 Å und kleiner als 0,01 ml/g,
   - eine Porenverteilung, so dass das Verhältnis zwischen dem Volumen V2, gemessen mittels Quecksilber-Porosimetrie, im Bereich zwischen $D_{mittel}$ - 30 Å und $D_{mittel}$ + 30 Å zum gesamten Quecksilbervolumen größer als 0,6 ist - das Volumen V3, gemessen mittels Quecksilber-Porosimetrie, im Bereich zwischen Poren mit einem Durchmesser $D_{mittel}$ + 30 Å kleiner als 0,1 ml/g ist, - das Volumen V6, gemessen mittels Quecksilber-Porosimetrie, im Bereich zwischen Poren mit einem Durchmesser größer als $D_{mittel}$ + 15 Å kleiner als 0,2 ml/g ist,
   - ein Röntgendiffraktionsdiagramm, das mindestens die charakteristischen Hauptlinien von mindestens einem der Übergangsaluminiumoxide enthält, die die Gruppe, bestehend aus den rho-, chi-, eta-, gamma-, kappa-, theta- und delta-Aluminiumoxiden umfasst,

   **dadurch gekennzeichnet, dass** der Siliciumdioxid-Aluminiumoxid-Träger aus einer Mischung aus einer teilweise in saurem Medium löslichen Aluminiumoxidverbindung und einer vollständig löslichen Siliciumdioxidverbindung oder aus einer vollständig löslichen Kombination aus Aluminiumoxid und hydrierten Siliciumdioxiden erhalten wird, wobei auf die Formgebung des Siliciumdioxid-AluminiumoxidTrägers eine hydrothermische oder thermische Behandlung folgt.

10. Verfahren nach Anspruch 9, wobei der Gehalt des Trägers an kationischen Verunreinigungen kleiner als 0,1 Gew.-% ist.

11. Verfahren nach einem der Ansprüche 9 und 10, wobei der Gehalt des Trägers an anionischen Verunreinigungen kleiner als 0,5 Gew.-% ist.

12. Verfahren nach einem der Ansprüche 9 bis 11, wobei das Röntgendiffraktionsdiagramm des Trägers mindestens die charakteristischen Hauptlinien mindestens eines der Übergangsaluminiumoxide enthält, die die Gruppe bestehend aus den eta-, theta-, delta- und gamma-Aluminiumoxiden umfasst.

13. Verfahren nach einem der Ansprüche 9 bis 12, wobei das Röntgendiffraktionsdiagramm des Trägers mindestens die charakteristischen Hauptlinien mindestens eines der Übergangsaluminiumoxide enthält, die die Gruppe bestehend aus den eta- und gamma-Aluminiumoxiden umfasst.

14. Verfahren nach einem der Ansprüche 9 bis 13, wobei der mittlere Porendurchmesser des Trägers im Bereich zwischen 40 und 120 Å liegt.

15. Verfahren nach einem der Ansprüche 9 bis 14, wobei der Träger mindestens zwei Siliciumdioxid-Aluminiumoxid-Zonen umfasst, die Si/Al-Verhältnisse aufweisen, die kleiner oder größer sind als das gesamte Si/Al-Verhältnis, das durch Röntgenfluoreszenz bestimmt wird.

16. Verfahren nach einem der Ansprüche 9 bis 15, wobei der Träger eine einzige Siliciumdioxid-Aluminiumoxid-Zone umfasst, die ein Si/Al-Verhältnis gleich dem gesamten Si/Al-Verhältnis aufweist, das durch Röntgenfluoreszenz bestimmt wird, und kleiner als 2,3 ist.

**17.** Verfahren nach einem der Ansprüche 9 bis 16, wobei die Packungsdichte des Trägers nach dem Kalzinieren größer als 0,65 g/cm$^3$ ist.

**18.** Verfahren nach einem der Ansprüche 9 bis 17, wobei die Azidität des Trägers, gemessen mittels IR-Monitoring der Thermodesorption des Pyridins, so ist, dass das B/L-Verhältnis im Bereich zwischen 0,05 und 1 liegt.

**19.** Verfahren zum Hydrokracken und/oder zur Hydrokonversion von Kohlenwasserstoffeinsätzen, das den Katalysator verwendet, der gemäß dem Herstellungsverfahren nach einem der Ansprüche 1 bis 18 hergestellt wurde.

**20.** Verfahren zum Hydrokracken und/oder zur Hydrokonversion nach Anspruch 19, das gemäß dem genannten Verfahren in einem Schritt ausgeführt wird.

**21.** Verfahren zum Hydrokracken und/oder zur Hydrokonversion nach Anspruch, umfassend:

- eine erste Reaktionszone zur Hydroraffination, in der der Einsatz mit mindestens einem Katalysator zur Hydroraffination in Kontakt gebracht wird, der im Standardaktivitätstest eine Methylcyclohexan-Umwandlungsrate von kleiner als 10 Masse-% aufweist.
- eine zweite Reaktionszone zum Hydrokracken, in der mindestens ein Teil des Abflusses, der aus dem Schritt zur Hydroraffination stammt, mit mindestens einem nicht zeolitischen Katalysator zum Hydrokracken in Kontakt gebracht wird, der im Standardaktivitätstest eine Methylcyclohexan-Umwandlungsrate von mehr als 10 Masse-% aufweist, und in der der Anteil an katalytischem Volumen des Katalysators zur Hydroraffination 20 bis 45 % des gesamten katalytischen Volumens darstellt.

**22.** Verfahren zum Hydrokracken und/oder zur Hydrokonversion nach Anspruch 19, das mindestens eine erste Reaktionszone zur Hydroraffination und mindestens eine zweite Reaktionszone umfasst, die ein Hydrokracken mindestens eines Teils des Abflusses aus der ersten Zone umfasst und eine unvollständige Trennung des Ammoniaks des Abflusses umfasst, der aus der ersten Zone austritt.

**23.** Verfahren zum Hydrokracken und/oder zur Hydrokonversion nach Anspruch 19 in dem genannten Verfahren in zwei Schritten.

**24.** Verfahren nach einem der Ansprüche 19 bis 23, das in Gegenwart von Wasserstoff bei einer Temperatur von mehr als 200 °C, bei einem Druck von mehr als 1 MPa arbeitet, wobei die Raumgeschwindigkeit im Bereich zwischen 0,1 und 20h$^{-1}$ liegt und die eingeführte Wasserstoffmenge so ist, dass das Volumenverhältnis Liter Wasserstoff/ Liter Kohlenwasserstoff im Bereich zwischen 80 und 5.000 1/1 liegt.

**25.** Verfahren zum Hydrokracken und/oder zur Hydrokonversion nach einem der Ansprüche 19 bis 24, das bei einem Druck im Bereich zwischen 20 und 60 Bar arbeitet und zu Umwandlungen von weniger als 40 % führt.

**26.** Verfahren nach einem der Ansprüche 19 bis 25, das im Festbett arbeitet.

**27.** Verfahren nach einem der Ansprüche 19 bis 25, das in brodelnder Wirbelschicht arbeitet.

**28.** Verfahren nach Anspruch 23, wobei der Katalysator mindestens auf einem der edlen Elemente der Gruppe VIII basiert.

**29.** Verfahren nach Anspruch 28, wobei der Katalysator auf Platin und/oder Palladium basiert.

**30.** Verfahren zur Hydrobehandlung von Kohlenwasserstoffeinsätzen, das den Katalysator verwendet, der gemäß dem Herstellungsverfahren nach einem der Ansprüche 8 bis 18 hergestellt wurde.

**31.** Verfahren nach Anspruch 30, das stromaufwärts eines Verfahrens zum Hydrokracken angeordnet ist.

**32.** Verfahren nach Anspruch 31, bei dem der Katalysator zum Hydrokracken auf einem Zeoliten basiert.

**33.** Verfahren nach Anspruch 31, bei dem der Katalysator zum Hydrokracken auf Siliciumdioxid-Aluminiumoxid basiert.

**34.** Verfahren nach einem der Ansprüche 19 bis 33, wobei der Katalysator zum Hydrokracken auf Nickel und Wolfram

36

basiert.

**35.** Verfahren nach einem der Ansprüche 19 bis 34, wobei die Kohlenwasserstoffeinsätze ausgewählt sind aus der Gruppe bestehend aus LCO (Light Cycle Oil), atmosphärischen Destillaten, Vakuumdestillaten, Einsätzen, die aus Einheiten zur Aromatenextraktion von Schmierölgrundstoffen stammen oder aus der Lösemittelentparaffinierung von Schmierölgrundstoffen stammen, Destillate, die aus Verfahren zur Entschwefelung oder zur Hydrokonversion im Festbett oder in brodelnder Wirbelschicht von AR (atmosphärischen Rückständen) und/oder VR (Vakuumrückständen) und/oder entasphaltierten Ölen stammen, allein oder als Mischung.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5370788 A
- US 2908635 A
- US 3423332 A
- US 3433747 A
- US 3451947 A
- US 3629152 A
- US 3650988 A
- US 3520654 A
- US 3630670 A
- US 3864461 A
- US 4154812 A
- US 4313923 A
- DE 3243193
- US 4371513 A

- FR 1261182
- FR 1381282
- EP 15196 A
- FR 1357830
- US 3268295 A
- US 3245919 A
- WO 0001617 A
- US 1371808 A
- US 2892858 A
- US 4676928 A
- US 6030599 A
- US 4066574 A
- EP 0387109 A
- US 3124418 A

**Littérature non-brevet citée dans la description**

- **B.C. LIPPENS ; J.J. STEGGERDA.** Physical and Chemical aspects of adsorbents and catalysts. Academic Press, 1970, 171-211

- Applied Heterogenous Catalysis. Technip, 1987
- **B.BEGUIN ; E.GARBOWSKI ; M.PRIMET.** *Journal of Catalysis,* 1991, vol. 127, 595